(19) Europäisches Patentamt / European Patent Office / Office européen des brevets

(11) **EP 4 099 084 A1**

(12) **EUROPEAN PATENT APPLICATION**
published in accordance with Art. 153(4) EPC

(43) Date of publication:
**07.12.2022 Bulletin 2022/49**

(21) Application number: **21746935.2**

(22) Date of filing: **29.01.2021**

(51) International Patent Classification (IPC):
*G02B 27/01* (2006.01)   *B32B 7/023* (2019.01)
*B32B 17/10* (2006.01)   *B60K 35/00* (2006.01)
*C03C 27/12* (2006.01)   *G02B 5/30* (2006.01)

(52) Cooperative Patent Classification (CPC):
**B32B 7/023; B32B 17/00; B32B 17/10;
B60K 35/00; G02B 5/30; G02B 27/01**

(86) International application number:
**PCT/JP2021/003333**

(87) International publication number:
**WO 2021/153763 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2020 JP 2020013130**

(71) Applicant: **Nippon Kayaku Kabushiki Kaisha
Tokyo 100-0005 (JP)**

(72) Inventor: **TAKAHASHI, Chihiro
Tokyo 115-8588 (JP)**

(74) Representative: **Hentrich Patent- & Rechtsanwälte
PartG mbB
Syrlinstraße 35
89073 Ulm (DE)**

(54) **OPTICAL FUNCTIONAL FILM FOR HEAD-UP DISPLAY, OPTICAL LAMINATE, FUNCTIONAL GLASS, AND HEAD-UP DISPLAY SYSTEM**

(57)   The present invention relates to an optical functional film for a head-up display, having two or more slow axis zones different in slow axis angles in the same plane, wherein a maximum difference between slow axis angles is more than 5° and less than 30°.

FIG.1

**Description**

Technical Field

The present invention relates to, for example, an optical functional film, an optical laminate, and functional glass which are suitable to be applied to a head-up display, and relates to a head-up display using the same.

Background Art

A navigation system, a head-up display (hereinafter also referred to as a "HUD"), and the like are used as methods for displaying information to drivers of cars and airplanes. A HUD is a system which projects images projected from image projection means such as a liquid crystal display (hereinafter also referred to as an "LCD"), for example, on a windshield of a car or the like.

Emission light emitted from image display units is reflected on a reflecting mirror and further reflected on a windshield, and then reaches an observer. Although the observer sees the image projected on the windshield, it appears as if the image were at an image position beyond the windshield. In this method, since the driver can obtain various pieces of information in a state in which the driver gazes ahead of the windshield almost without moving their sight line, a HUD is safer than conventional car navigation systems, in which drivers had to move their sight lines.

A problem was that, although, in a HUD system, display information was projected while being superimposed on a scene actually seen through a windshield, the display light was reflected on the two surfaces inside and outside the windshield, resulting in the reflected image being a double image, and causing the display information to be difficult to see.

With respect to this problem, it is known that the problem of double-image of the reflected image can be improved using a phase difference element which can change a polarization direction by 90° for the windshield for cars. For example, in Patent Literature 1, it is disclosed that when display light converted into S polarized light comes into a windshield for cars including a film-like optical rotator therein at a Brewster angle, some of the S polarized light is reflected on the inner surface of the windshield of a car, S polarized light transmitted through the surface is converted into P polarized light by an optical rotator, and all of the P polarized light is further emitted from the outer surface of the windshield of the car to outside of the car to prevent a double image. If the conversion between S polarized light and P polarized light is not performed very efficiently in such a windshield for cars, or the like, a double image is however formed by S polarized light which returns without being emitted outside a car.

As different means for suppressing a double image, a technique for letting P polarized come in using a light control film in which a circularly polarized light reflecting film manufactured using a cholesteric liquid crystal layer is clamped with two 1/4 wavelength plates is known (Patent Literature 2). In this technique, converting linear polarized light which comes in into circularly polarized light by a 1/4 wavelength plate and reflecting the converted circularly polarized light on the light reflecting film manufactured using the cholesteric liquid crystal layer enable an observer to visually confirm the reflected light. Also, in this technique, it is however desirable to convert P polarized light which comes into a 1/4 wavelength plate on the inner side of the car into circularly polarized light as efficiently as possible and convert the circularly polarized light which comes into the 1/4 wavelength plate on the outer side of the car through the cholesteric liquid crystal layer into P polarized light more efficiently.

Document List

Patent Literatures

Patent Literature 1: Japanese Patent Application Laid Open No. H6-40271
Patent Literature 2: Japanese Patent No. 5973109

Summary of Invention

Technical Problem

An object of the present invention is to provide an optical functional film, an optical laminate, and functional glass for a head-up display which are excellent in polarized light conversion efficiency, and a head-up display system using the same.

Solution to Problem

The present inventor has examined earnestly to achieve the above-mentioned object, consequently found that the polarized light conversion efficiency is improved using an optical functional film for a head-up display having a plurality of slow axes which are different in slow axis angles in the same plane in a certain range, and when the optical functional film is applied to a head-up display, the formation of a double image can be suppressed in a wide range, and completed the present invention.

That is, the present invention relates to following 1) to 8).

1) An optical functional film for a head-up display, having two or more slow axis zones different in slow axis angles in the same plane, wherein a maximum difference between slow axis angles is more than 5° and less than 30°.

2) The optical functional film according to the above-mentioned 1), wherein the maximum difference between the slow axis angles is 10° or more and 25° or less.

3) An optical laminate for a head-up display, including: the optical functional film according to the above-mentioned 1) or 2); and an intermediate film.

4) Functional glass for a head-up display, including: the optical functional film according to the above-mentioned 1) or 2) or the optical laminate according to the above-mentioned 3); and a glass plate.

5) A head-up display system, including the optical functional film according to the above-mentioned 1) or 2), the optical laminate according to the above-mentioned 3), or the functional glass according to the above-mentioned 4).

6) The head-up display system according to the above-mentioned 5), wherein an angle which a slow axis at an incidence angle of 90° such that light emitted from display image projecting means comes into the optical functional film perpendicularly and a slow axis at an incidence angle of 80° such that the light comes in from a position oblique at 10° to an axis perpendicular to a surface of the optical functional film in a horizontal direction is 5° or more and 20° or less.

7) The head-up display system according to the above-mentioned 5) or 6), wherein an angle which the slow axis at an incidence angle of 90° such that light emitted from the display image projecting means comes into the optical functional film perpendicularly and a slow axis at an incidence angle of 70° such that the light comes in from a position oblique at 20° to the axis perpendicular to the surface of the optical functional film in the horizontal direction is 10° or more and 30° or less.

8) The head-up display system according to any one of the above-mentioned 5) to 7), including the functional glass, wherein an incidence angle at which light emitted from the display image projecting means comes into the functional glass is in the range of $\alpha$-10° to $\alpha$+10° to a Brewster angle $\alpha$.

Effects of Invention

According to the present invention, an optical functional film, an optical laminate, and functional glass which are excellent in polarized light conversion efficiency and suitable to be applied to a head-up display, and a head-up display system using the same can be achieved.

Brief Description of Drawings

[Fig. 1] A front view showing one embodiment of an optical functional film according to the present invention.
[Fig. 2] A front view showing one embodiment of the optical functional film according to the present invention.
[Fig. 3] A side sectional view showing one embodiment of an optical laminate according to the present invention.
[Fig. 4] A side sectional view showing one embodiment of functional glass according to the present invention.
[Fig. 5] A schematic diagram showing one embodiment of a head-up display system according to the present invention.
[Fig. 6] A schematic diagram showing a summary in which light emitted from a display projecting means comes into the functional glass according to the present invention.

[Fig. 7] A schematic diagram showing a summary in which light emitted from the display projecting means comes into the functional glass according to the present invention near the Brewster angle.

[Fig. 8] A graph showing reflection spectra of light reflecting layers manufactured in the Examples.

[Fig. 9] A graph showing spectral characteristics of the natural light transmittance and the polarized light transmittance of a two-layer 1/2 wavelength plate manufactured in Test Example 1 in the Examples.

[Fig. 10] A graph showing spectral characteristics of the natural light transmittance and the polarized light transmittance of a one-layer 1/2 wavelength plate manufactured in Test Example 2 in the Examples.

Description of Embodiments

Hereinafter, embodiments according to the present invention will be described with reference to the drawings. The following embodiments merely illustrate some typical embodiments of the present invention, and various modifications can be added within the scope of the present invention. Hereinafter, the expression "for a head-up display" may be omitted, and an optical functional film for a head-up display, an optical laminate for a head-up display, and functional glass for a head-up display may be described merely as an optical functional film, an optical laminate, and functional glass, respectively. Terms such as "(meth)acryloyl" and "(meth)acrylate" mean "acryloyl" or "methacryloyl" and "acrylate" or "methacrylate", respectively. Furthermore, a "head-up display" may be expressed as an HUD.

[(A) Optical functional film]

An optical functional film of the present invention includes at least one optical function layer having the function of converting the polarization axis of incident light to obtain desired polarized light. Examples of such an optical function layer include a phase difference film such as a 1/2 wavelength plate or a 1/4 wavelength plate, a laminate of a plurality of phase difference films, or a laminate of those and a circularly polarized light reflecting layer. Specifically, (A-1) a 1/2 wavelength plate, (A-2) a 1/4 wavelength plate, (A-3) a laminate of a 1/2 wavelength plate and a circularly polarized light reflecting layer, and (A-4) a laminate of a 1/4 wavelength plate and a circularly polarized light reflecting layer can be illustrated. Among these, (A-1) one or more 1/2 wavelength plates or (A-4) a laminate in which one or more circularly polarized light reflecting layers are clamped with two 1/4 wavelength plates are preferable as an optical functional film. As the circularly polarized light reflecting layer, for example, a cholesteric liquid crystal layer using a cholesteric liquid crystal is preferable.

The optical functional film of the present invention is an optical functional film for a head-up display, having two or more slow axis zones different in slow axis angles in the same plane, wherein a maximum difference between slow axis angles is more than 5° and less than 30°. Here, a slow axis is an optic axis which shows a direction of an axis wherein the refractive index reaches the maximum with respect to polarized light which comes into the surface perpendicular to the traveling direction of the light. A slow axis angle means its angle, namely an angle which a slow axis forms with the axis in the length direction of an optical functional film (vertical axis). The optical functional film of the present invention has two or more slow axis zones different in slow axis angles. As long as the slow axis zones are two or more, the number thereof is not limited. Several hundred to several thousand slow axis zones, that is, substantially the gradations of slow axes, may be formed. The maximum difference between slow axis angles means the difference between the maximum slow axis angle and the minimum slow axis angle in the same plane of one optical functional film, namely a value of the greatest difference between slow axis angles among slow axis angles in the same plane. The optical functional film of the present invention is a film used for a head-up display. If a portion having a slow axis angle difference of 30° or more is present in a region other than a portion used as a display portion, the slow axis angle in the region is not therefore considered as the maximum slow axis angle difference.

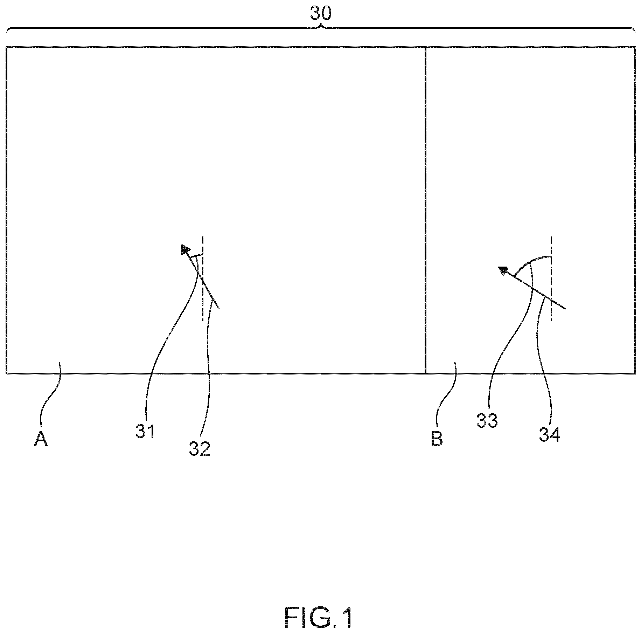

Fig. 1 is an illustration of an embodiment of an optical functional film having two slow axis zones in the same plane. When, in Fig. 1, one is defined as a slow axis zone A and the other is defined as a slow axis zone B among two regions which an optical functional film 30 has, the slow axis angle of a slow axis 32 in the slow axis zone A and the slow axis angle of a slow axis 34 in the slow axis zone B exhibit angles different from each other. The difference between the slow axis angle 31 in the slow axis zone A and the slow axis angle 33 in the slow axis zone B is more than 5° and less than 30°, and namely the maximum difference between the slow axis angles is more than 5° and less than 30°. In this embodiment, the lower limit of the maximum difference in slow axis angles is preferably 6°, and more preferably 7°, further preferably 8°, particularly preferably 10°, and the most preferably 15° or 16°. The upper limit of the maximum difference between slow axis angles is preferably 28°, more preferably 27°, further preferably 26°, particularly preferably 25°, and the most preferably 22°. Therefore, the most preferable maximum difference between slow axis angles is 16° or more and 22° or less.

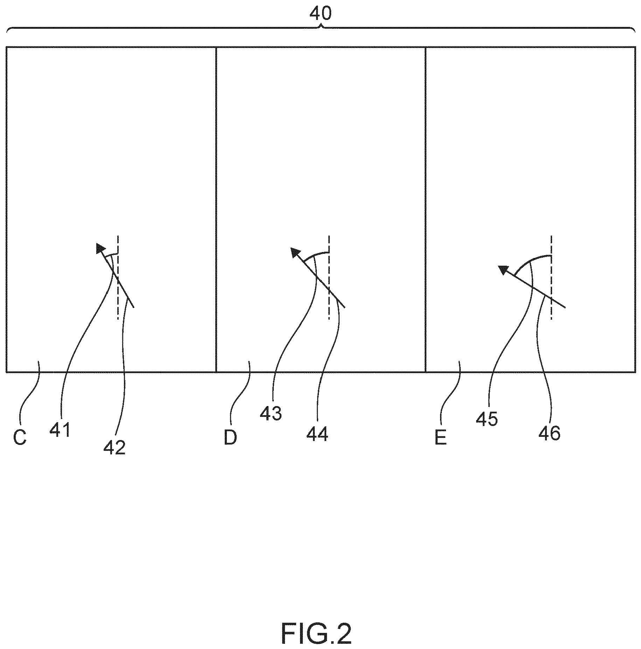

Fig. 2 is an illustration of an embodiment of an optical functional film having three slow axis zones in the same plane. When, in Fig. 2, the left region is defined as a slow axis zone C, the central region is defined as a slow axis zone D, and the right region is defined as a slow axis zone E among three regions which an optical functional film 30 has, at least two of the slow axis angle of a slow axis 42 in the slow axis zone C, the slow axis angle of a slow axis 44 in the slow axis zone D, and the slow axis angle of a slow axis 46 in the slow axis zone E exhibit different angles. When it is supposed that the slow axis angle 41 in the slow axis zone C < the slow axis angle 43 in the slow axis zone D < the slow axis angle 45 in the slow axis zone E as to slow axis angles, the difference between the slow axis angle 41 in the slow axis zone C and the slow axis angle 45 in the slow axis zone E is more than 5° and less than 30°, namely the maximum difference between the slow axis angles is more than 5° and less than 30°. In the present embodiment, the lower limit of the maximum difference between the slow axis angles is preferably 6°, more preferably 7°, further preferably 8°, particularly preferably 10°, and the most preferably 15° or 16°. The upper limit of the maximum difference between the slow axis angles is preferably 28°, more preferably 27°, further preferably 26°, particularly preferably 25°, and the most preferably 22°. Therefore, the most preferable maximum difference between the slow axis angles is 16° or more and 22° or less.

The optical functional film of the present invention may be a film having three or more slow axis zones different in slow axis angles in the same plane, and the difference in slow axis angles between adjoining slow axis zones may be 5° or more and 20° or less. For example, in Fig. 2, the slow axis angle 43 has a difference of 5° or more and 20° or less from the slow axis angle 41 in the slow axis zone D adjoining the slow axis zone C, namely the slow axis zone D and the slow axis zone C have a gap between the slow axis angles. Similarly, the slow axis angle 45 has a difference of 5° or more and 20° or less from the slow axis angle 43 in the slow axis zone E adjoining the slow axis zone D, namely the slow axis zone E and the slow axis zone D has a gap between the slow axis angles. The lower limit of the gap in the slow axis angles between these adjoining slow axis zones is preferably 6°, further preferably 7°, and particularly preferably 8°. The upper limit of the gap in the slow axis angles between the adjoining slow axis zones is preferably 19°, further preferably 18°, and particularly preferably 17°. That is, it is the most preferable that the gap in the slow axis angles between the adjoining slow axis zones be 8° or more and 17° or less.

It is preferable that the optical functional film of the present invention have three or more slow axis zones having different slow axis angles respectively in the same plane, and it is further preferable that the optical functional film have slow axis zones all having different slow axis angles. For example, it is preferable the slow axis zone C, the slow axis zone D, and the slow axis zone E in Fig. 2 have slow axis angles different from each other, and the slow axis angle 41, the slow axis angle 43, and the slow axis angle 45 are all different. Here, the slow axes are all different, and, for example, a configuration such that the slow axis in the slow axis zone C is 25°, the slow axis in the slow axis zone D is 30°, and the slow axis in the slow axis zone E is 35° is meant thereby.

As particularly preferable embodiments of the optical functional film of the present invention, (i) if the optical function layer is one 1/2 wavelength plate, it is preferable that the maximum difference between the slow axis angles be 7° or more and 13° or less, and it is more preferable that the maximum difference be 9° or more and 11° or less. (ii) If the optical function layer is a plurality of, especially two, 1/2 wavelength plates, it is preferable that the maximum difference between the slow axis angles be 10° or more and 25° or less, and it is more preferable that the maximum difference be 18° or more and 22° or less. (iii) If the optical function layer is a laminate in which one or more circularly polarized light reflecting layers are clamped with two 1/4 wavelength plates, it is preferable that the maximum difference between the slow axis angles be 10° or more and 25° or less, and it is more preferable that the maximum difference be 18° or more and 22° or less.

<1/2 wavelength plate>

When the 1/2 wavelength plate is used as the optical functional layer, the 1/2 wavelength plate is a phase difference element having the function of converting P polarized light into S polarized light, or converting S polarized light into P polarized light, namely converting a polarization axis, and for example, can be obtained by monoaxially stretching a film including a polycarbonate or cycloolefin polymer so that phase difference is 1/2 of a wavelength or by orienting a horizontally oriented polymerizable liquid crystal at a thickness such that the phase difference is 1/2 of a wavelength. The 1/2 wavelength plate using a horizontally oriented polymerizable liquid crystal generally includes a polymerizable liquid crystal layer as a layer having the action of converting a polarization axis and a supporting substrate to be coated with a coating liquid which forms the polymerizable liquid crystal layer. However, the supporting substrate is not an essential constituent member for the optical functional film of the present invention, and the polymerizable liquid crystal layer can also be transferred to other base materials (for example, an intermediate film and a glass plate) for use. It is preferable that the upper limit value of the thickness of such a 1/2 wavelength plate be 10 μm or less, and it is more preferable that the upper limit value be 5 μm or less from the viewpoint of the orientation of the liquid crystal. Meanwhile, it is preferable that the lower limit value of the thickness of a 1/2 wavelength plate be 0.3 μm or more, and it is more preferable that the lower limit value be 0.5 μm or more from the viewpoint of the polymerizability of the liquid crystal. When light comes into the main surface of the 1/2 wavelength plate from an oblique position, the phase difference may change depending on the incidence angle of light. In such a case, to adapt the phase difference more strictly, change in the phase difference accompanied with the incidence angle can be suppressed, for example, by using a phase difference element in which the refractive index of the phase difference element is adjusted. For example, when the refractive index in the direction of a slow axis in the surface of the phase difference element is defined as nx, the refractive index in the direction at right angles to nx in the surface of the phase difference element is defined as ny, and the refractive index in the thickness direction of the phase difference element is defined as nz, the coefficient Nz represented by the following Expression (1) is controlled to preferably 0.3 or more and 1.0 or less, more preferably 0.5 or more and 0.8 or less.

[Expression 1]

$$Nz = (nx - nz)/(nx - ny) \quad (1)$$

When the 1/2 wavelength plate includes a polymerizable liquid crystal layer, a liquid crystal composition forming the polymerizable liquid crystal layer is applied to a supporting substrate. It is preferable that such a supporting substrate be transparent in a visible light region to maintain the visibility of a display image when the 1/2 wavelength plate is used for an HUD. The visible light transmittance at a wavelength of 380 to 780 nm may be specifically 50% or more, it is preferable that the visible light transmittance be 70% or more, and it is more preferable that the visible light transmittance be 85% or more. Although the supporting substrate may be colored, it is preferable that the supporting substrate be not or hardly colored. Moreover, it is preferable that the refractive index of the supporting substrate be 1.2 to 2.0, and it is more preferable that the refractive index be 1.4 to 1.8. The thickness of the supporting substrate may be suitably selected depending on the use, and is preferably 5 $\mu$m to 1000 $\mu$m, more preferably 10 $\mu$m to 250 $\mu$m, and particularly preferably 15 $\mu$m to 150 $\mu$m.

The supporting substrate may be a monolayer, or may be a laminate having two or more layers. Example of the supporting substrate include triacetylcellulose (TAC), acryl, polycarbonate, polyvinyl chloride, polyolefin, and polyethylene terephthalate (PET). Among these, triacetylcellulose (TAC), polyolefin, acryl, and the like, which have little birefringence, are preferable.

Thereafter, a method for manufacturing a 1/2 wavelength plate using the nematic liquid crystal monomer having the above-mentioned polymerizable group will be described. As such a method, for example, the nematic liquid crystal monomer having the polymerizable group is dissolved in a solvent, and a photopolymerization initiator is subsequently added. As long as the liquid crystal monomer to be used can be dissolved in such a solvent, such a solvent is not particularly limited. The examples include cyclopentanone, toluene, methyl ethyl ketone, methyl isobutyl ketone, cyclopentanone, toluene, and the like, and cyclopentanone, toluene and the like are preferable. Then, this solution is applied to a plastic substrate such as a PET film or a TAC film used as a supporting substrate so that the thickness is as uniform as possible, the solution is left to stand for a certain period of time under temperature conditions under which the solution becomes a liquid crystal, and is oriented on the supporting substrate while the solvent is removed by heating. At this time, the orientation of the liquid crystal can be more uniform by rubbing-treating the plastic substrate surface in a desired direction before the coating of the plastic film surface or by performing the orientation treatment of forming a photo-oriented material, which exhibits photo-orientation by polarized light irradiation, into a film on the plastic film surface, irradiating polarized light, and the like. The slow axes of 1/2 wavelength plates can be controlled to desired angles, and the haze values of the 1/2 wavelength plates can be reduced thereby. Subsequently, the 1/2 wavelength plate having a desired slow axis can be obtained by irradiating the nematic liquid crystal monomer with ultraviolet rays using a high-pressure mercury lamp or the like while this orientation state is maintained, and fixing the orientation of the liquid crystal.

The main role of the 1/2 wavelength plate is to convert S polarized light or P polarized light transmitted without being reflected on the surface into P polarized light or S polarized light. Reflection from the supporting substrate disposed outside can be reduced, and a double image is suppressed thereby.

<1/4 wavelength plate>

A 1/4 wavelength plate can also be used as an optical functional layer depending on the design of a HUD system. The 1/4 wavelength plate is a phase difference element having the function of converting circularly polarized light into linear polarized light, and, for example, can be obtained by monoaxially stretching a film including a polycarbonate or cycloolefin polymer so that the phase difference is 1/4 of a wavelength or by orienting a horizontally oriented polymerizable liquid crystal at a thickness such that the phase difference is 1/4 of a wavelength. Also, it is preferable that a polymerizable liquid crystal layer be included in the 1/4 wavelength plate in the same way as the 1/2 wavelength plate. In such a case, the 1/4 wavelength plate includes a polymerizable liquid crystal layer as a layer having the action of converting a polarization axis and a supporting substrate to be coated with a coating liquid which forms the polymerizable liquid crystal layer. The same materials as the nematic liquid crystal monomer and the supporting substrate to be used in the above-mentioned 1/2 wavelength plate can be used for the polymerizable liquid crystal layer and the supporting substrate.

When the deviation of the phase difference due to wavelength dispersion is large, a phase difference element called a broadband 1/4 wavelength plate may be used as the 1/4 wavelength plate. The broadband 1/4 wavelength plate is a phase difference element in which the wavelength dependence of the phase difference is reduced. Examples include a phase difference element in which a 1/2 wavelength plate and a 1/4 wavelength plate having the same wavelength dispersion are laminated so that an angle which the respective slow axes form is 60° and a polycarbonate-based phase difference element in which the wavelength dependence of the phase difference is reduced (manufactured by TEIJIN LIMITED: PURE-ACE WR-S). Moreover, when light comes in at an oblique incidence angle to the 1/4 wavelength plate like a HUD, the phase difference may change with the incidence angle of light depending on the phase difference element. In such a case, as a method for matching the phase difference more strictly, for example, a change in the phase difference with the incidence angle can be suppressed by using a phase difference element in which the refractive index of the phase difference element is adjusted. As such an example, when the refractive index in the direction of the slow axis in the plane of the phase difference element is defined as nx, the refractive index in the direction perpendicular to nx in the plane of the phase difference element is defined as ny, and the refractive index in the thickness direction of the phase difference element is defined as nz, the coefficient Nz, which is represented by the above-mentioned Expression (1), is controlled to preferably 0.3 or more and 1.0 or less, more preferably 0.5 or more and 0.8 or less.

It is preferable that the upper limit value of the thickness of the 1/4 wavelength plate be 10 $\mu$m or less, and it is more preferable that the upper limit value be 5 $\mu$m or less from the viewpoint of the orientation of the liquid crystal. Meanwhile, it is preferable that the lower limit value of the thickness of the 1/4 wavelength plate be 0.3 $\mu$m or more, and it is more preferable that the lower limit value be 0.5 $\mu$m or more. It is preferable that the upper limit value of the thickness of the circularly polarized light reflecting layer be 10 $\mu$m or less, and it is more preferable that the upper limit value be 5 $\mu$m or less from the viewpoint of the orientation of the liquid crystal. Meanwhile, it is preferable that the lower limit value of the thickness of the circularly polarized light reflecting layer be 0.3 $\mu$m or more, and it is more preferable that the lower limit value be 0.5 $\mu$m or more from the viewpoint of the polymerizability of the liquid crystal.

When the optical functional film of the present invention includes a phase difference film which is a 1/2 wavelength plate or a 1/4 wavelength plate, it is preferable that these phase difference films include the polymerizable liquid crystal layers having a polymerizable liquid crystal compound. The polymerizable liquid crystal compound is a nematic liquid crystal monomer which has polymerizable groups in molecules, and exhibits liquid crystallinity in a certain temperature range or a certain concentration range. Examples of the polymerizable groups include a (meth)acryloyl group, a vinyl group, a chalconyl group, a cinnamoyl group, and an epoxy group. In order that the polymerizable liquid crystal exhibits liquid crystallinity, it is preferable that a mesogen group exist in a molecule. The mesogen group means a rod-like or plate-like substituent such as a biphenyl group, a terphenyl group, a (poly)phenyl benzoate ester group, a (poly)ether group, a benzylideneaniline group, or an acenaphthoquinoxaline group; or a disk-like substituent such as a triphenylene group, a phthalocyanine group, or an azacrown group, namely a group having the capability to induce liquid crystal phase behavior. A liquid crystal compound having a rod-like or plate-like substituent is known as a calamitic liquid crystal in the technical field. Examples of the nematic liquid crystal monomer having such polymerizable groups include polymerizable liquid crystals described in Japanese Patent Application Publication No. 2003-315556, Japanese Patent Application Publication No. 2004-29824, and the like; and polymerizable liquid crystals such as the PALIOCOLOR series (produced by BASF SE) and the RMM series (produced by Merck KGaA). The nematic liquid crystal monomers having these polymerizable groups may be used singly or as a mixture of two or more.

A polymerizable compound which can react with a nematic liquid crystal monomer having polymerizable groups and does not have liquid crystallinity can also be added. Examples of such a compound include ultraviolet curable resins. Examples of the ultraviolet curable resins include dipentaerythritol hexa(meth)acrylate, the reaction product of dipentaerythritol penta(meth)acrylate and 1,6-hexamethylene diisocyanate, the reaction product of a triisocyanate having an isocyanuric ring and pentaerythritol tri(meth)acrylate, the reaction product of pentaerythritol tri(meth)acrylate and isophorone diisocyanate, dipentaerythritol penta(meth)acrylate, dipentaerythritol tetra(meth)acrylate, pentaerythritol tetra(meth)acrylate, pentaerythritol tri(meth)acrylate, trimethylolpropane tri(meth)acrylate, ditrimethylolpropane tetra(meth)acrylate, tris(acryloxyethyl) isocyanurate, tris(methacryloxyethyl) isocyanurate, the reaction product of glycerol triglycidyl ether and (meth)acrylic acid, caprolactone-modified tris(acryloxyethyl) isocyanurate, the reaction product of trimethylolpropane triglycidyl ether and (meth)acrylic acid, triglycerol di(meth)acrylate, the reaction product of propylene glycol diglycidyl ether and (meth)acrylic acid, polypropylene glycol di(meth)acrylate, tripropylene glycol di(meth)acrylate, polyethylene glycol di(meth)acrylate, tetraethylene glycol di(meth)acrylate, triethylene glycol di(meth)acrylate, pentaerythritol di(meth)acrylate, the reaction product of 1,6-hexanediol diglycidyl ether and (meth)acrylic acid, 1,6-hexanediol di(meth)acrylate, glycerol di(meth)acrylate, the reaction product of ethylene glycol diglycidyl ether and (meth)acrylic acid, the reaction product of diethylene glycol diglycidyl ether and (meth)acrylic acid, bis(acryloxyethyl)hydroxyethyl isocyanurate, bis(methacryloxyethyl)hydroxyethyl isocyanurate, the reaction product of bisphenol A diglycidyl ether and (meth)acrylic acid, tetrahydrofurfuryl (meth)acrylate, caprolactone-modified tetrahydrofurfuryl (meth)acrylate, 2-hydroxyethyl (meth)acrylate, 2-hydroxypropyl (meth)acrylate, polypropylene glycol (meth)acrylate, polyethylene glycol (meth)acrylate, phenoxyhydroxypropyl (meth)acrylate, acryloylmorpholine, methoxypolyethylene glycol (meth)acrylate, methoxytetraethylene glycol (meth)acrylate, methoxytriethylene glycol (meth)acrylate, methoxyethylene glycol (meth)acrylate, methoxyethyl (meth)acrylate, glycidyl (meth)acrylate, glycerol (meth)acrylate, ethylcarbitol (meth)acrylate, 2-ethoxyethyl (meth)acrylate, N,N-dimethylaminoethyl (meth)acrylate, 2-cyanoethyl (meth)acrylate, the reaction product of butyl glycidyl ether and (meth)acrylic acid, butoxytriethylene glycol (meth)acrylate, and butanediol mono(meth)acrylate. These may be used singly or as a mixture of two or more. These ultraviolet curable resins not having liquid crystallinity have to be added to such an extent that the composition containing a nematic liquid crystal monomer does not lose liquid crystallinity, and the content of the ultraviolet curable resin is preferably 0.1 to 20 parts by mass, and more preferably 1.0 to 10 parts by mass based on 100 parts by mass of the nematic liquid crystal monomer having polymerizable groups.

When the nematic liquid crystal monomer having the above-mentioned polymerizable group and the polymerizable compound not having liquid crystallinity are ultraviolet curable, a photopolymerization initiator is added to cure a composition containing these by ultraviolet rays. Examples of the photopolymerization initiator include acetophenone-based compounds such as 2-methyl 1-[4-(methylthio)phenyl]-2-morpholinopropane-1 (Irgacure 907 produced by BASF SE), 1-hydroxycyclohexyl phenyl ketone (Irgacure 184 produced by BASF SE), 4-(2-hydroxyethoxy)-phenyl(2-hydroxy-2-propyl)ketone (Irgacure 2959 produced by BASF SE), 1-(4-dodecylphenyl)-2-hydroxy-2-methylpropan-1-one (Darocur 953 produced by Merck KGaA), 1-(4-isopropylphenyl)-2-hydroxy-2-methylpropan-1-one (Darocur 1116 produced by Merck KGaA), 2-hydroxy-2-methyl-1-phenylpropan-1-one (Irgacure 1173 by BASF SE), and diethoxyacetophenone; benzoin-based compounds such as benzoin, benzoin methyl ether, benzoin ethyl ether, benzoin isopropyl ether, benzoin isobutyl ether, and 2,2-dimethoxy-2-phenylacetophenone (Irgacure 651 produced by BASF SE); benzophenone-based compounds such as benzoylbenzoic acid, methyl benzoylbenzoate, 4-phenylbenzophenone, hydroxybenzophenone, 4-benzoyl 4'-methyldiphenyl sulfide, and 3,3'-dimethyl-4-methoxybenzophenone (Kayacure MBP produced by Nippon Kayaku Co., Ltd.); and thioxanthone-based compounds such as thioxanthone, 2-chlorothioxanthone (Kayacure CTX produced by Nippon Kayaku Co., Ltd.), 2-methylthioxanthone, 2,4-dimethylthioxanthone (Kayacure RTX produced by Nippon Kayaku Co., Ltd.), isopropylthioxanthone, 2,4-dichlorothioxanthone (Kayacure CTX produced by Nippon Kayaku Co., Ltd.), 2,4-diethylthioxanthone (Kayacure DETX produced by Nippon Kayaku Co., Ltd.), and 2,4-diisopropylthioxanthone (Kayacure DITX produced by Nippon Kayaku Co., Ltd.). Preferable examples of the photopolymerization initiator include Irgacure TPO, Irgacure TPO-L, Irgacure OXE01, Irgacure OXE02, Irgacure 1300, Irgacure 184, Irgacure 369, Irgacure 379, Irgacure 819, Irgacure 127, Irgacure 907, and Irgacure 1173 (all are produced by BASF SE), and particularly preferable examples include Irgacure TPO, Irgacure TPO-L, Irgacure OXE01, Irgacure OXE02, Irgacure 1300, and Irgacure 907. These photopolymerization initiators can be used singly or as a mixture obtained by mixing two or more at any ratio.

When the benzophenone-based compound or the thioxanthone-based compound is used as the photopolymerization initiator, an auxiliary agent can also be used in combination to promote photopolymerization reaction. Example of such an auxiliary agent include amine-based compounds such as triethanolamine, methyldiethanolamine, triisopropanolamine, n-butylamine, N-methyldiethanolamine, diethylaminoethyl methacrylate, Michler's ketone, 4,4'-diethylaminophenone, ethyl 4-dimethylaminobenzoate, (n-butoxy)ethyl 4-dimethylaminobenzoate, and isoamyl 4-dimethylaminobenzoate.

It is preferable that the amounts of the above-mentioned photopolymerization initiator and auxiliary agent added are such that the amounts thereof used do not affect the liquid crystallinity of the above-mentioned composition. The amounts thereof are preferably 0.5 parts by mass or more and 10 parts by mass or less, and more preferably 2 parts by mass or more and 8 parts by mass or less based on 100 parts by mass of the compound cured by ultraviolet rays in the composition. It is preferable that the amount of the auxiliary agent be 0.5 times or more and 2 times or less as many as the amount of the photopolymerization initiator.

In the optical functional film of the present invention, two or more optical functional layers may be provided. In this case, although nothing may be used between the optical functional layers, namely, the optical functional layers may be laminated directly, it is preferable that a pressure sensitive adhesive layer or an adhesive layer be provided between the optical function layers. Although examples of the pressure sensitive adhesive used for forming a pressure sensitive adhesive layer include an acrylic or rubber-based adhesive, the acrylic pressure sensitive adhesive, in which the adhesiveness, the holding power, and the like are easily adjusted, is preferable. Examples of the adhesive include ultraviolet curable resin compositions, thermosetting resin compositions, and mixtures thereof. In the case of an ultraviolet curable resin, the optical functional layers can be adhered by irradiating ultraviolet rays and curing the composition in which a plurality of monomers having acryloyl groups or epoxy groups is mixed in the presence of a photopolymerization initiator. In the case of a thermosetting resin composition, the optical functional layers can be adhered by heating and curing the composition in which a plurality of monomers having epoxy groups in the presence of an acid catalyst. Alternatively, the optical functional layers can be adhered by heating and curing a composition including a plurality of monomers or polymers having amino groups, carboxyl groups, and hydroxyl groups in the presence of a compound having isocyanate groups or melamine.

[Method for manufacturing optical functional film]

It is preferable that, in the optical functional film of the present invention, a plurality of slow axis zones be achieved with a phase difference film, namely the optical functional film include a phase difference film having a plurality of slow axes. In this case, it is not meant that a plurality of phase difference films is pasted together, but a configuration having a plurality of slow axes in one phase difference film is meant. To achieve two or more slow axis zones different in slow axis angles, in the same plane of the optical functional film, a plurality of slow axes is controlled at desired angles. Examples of such a method include performing rubbing treatment in a desired direction in each predetermined region on the surface of the optical function layer. Additionally, the orientation angles of the photo-oriented material are different angles in all the respective predetermined regions on the surface of the optical functional layer by forming the photo-oriented material, which exhibits photo-orientation according to the angle of polarized light by polarized light irradiation, into films on the surface of the predetermined optical functional layer, and performing setting-up so that an angle for the polarized light irradiation in each predetermined region is oriented to a desired angle at the time of the polarized light irradiation, and a liquid crystal is oriented and fixed on these orientation-treated surfaces. An optical functional film having two or more slow axis zones different in slow axis angles can be manufactured by performing such orientation treatment on the same plane of the optical functional film.

[(B) Optical laminate]

In the optical laminate of the present invention, the intermediate film is laminated onto the above-mentioned optical functional film. It is preferable that the intermediate film be a resin film of a thermoplastic resin, and it is particularly preferable that the intermediate film be a film of polyvinyl butyral. Although the number of the intermediate film may be one or more, an optical laminate having a structure in which the optical functional film was clamped by two intermediate films is preferable. It is preferable to use two optical functional films for an optical laminate. In this case, it is preferable that the differences between slow axis angles in the same plane be the same in the two optical functional films.

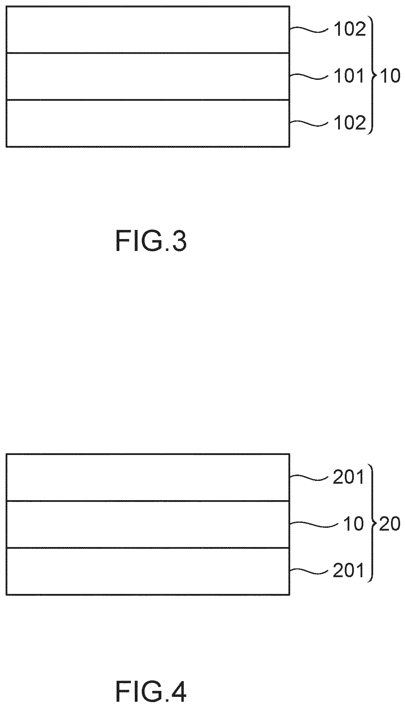

One embodiment of the optical laminate of the present invention is shown in Fig. 3, an optical laminate 10 has a configuration in which an optical functional film 101 is clamped with two intermediate films 102. For example, the optical functional film 101 corresponds to the optical functional film (30 or 40) shown in Fig. 1 or Fig. 2. In Fig. 3, two optical functional films 101 having the same difference between slow axis angles in the same plane may be provided in the optical laminate 10.

[Intermediate film]

As the intermediate film, a thermoplastic resin can be used. It is preferable that a commonly used intermediate film for automotive application can be used. Examples of such the intermediate film for automotive application include polyvinyl butyral-based resins (PVBs), polyvinyl alcohol resins (PVAs), ethylene-vinyl acetate copolymer-based resin (EVAs), or cycloolefin polymers (COPs). Intermediate films manufactured from these resins are preferable due to being versatile as intermediate films for laminated glass. As long as the reflection of display light is not affected at the time of applying the optical laminate to the HUD system described below, the thickness of the intermediate film is not particularly limited, and can be suitably designed depending on the use.

An ultraviolet ray absorbent, an antioxidant, an antistatic agent, a heat stabilizer, a coloring agent, an adhesion control agent, and the like may be optionally added to the intermediate film to be used for the present invention, especially the intermediate film in which particulates which absorbs infrared rays are dispersed is important for manufacturing heat shielding laminated glass with high performance. Particulates of materials such as metals of Sn, Ti, Zn, Fe, Al, Co, Ce, Cs, In, Ni, Ag, Cu, Pt, Mn, Ta, W, V, and Mo, metal oxides of the metals, metal nitrides of the metals, or complexes containing at least two or more thereof, which have conductivity, are used for particulates which absorb infrared rays. These materials may be doped with Sn, Sb, F, or the like. When especially tin-doped indium oxide (ITO), antimony-doped tin oxide (ATO), and fluorine-doped tin oxide, which is transparent in the visible light region, are used as windows for construction or cars required for transparency, the materials are preferable. It is preferable that the particle size of the particulates which absorb infrared rays and are dispersed in the intermediate film be 0.2 $\mu$m or less. If the particle size of the particulates is 0.2 $\mu$m or less, infrared rays can be absorbed while the scattering of light in the visible light region, the physical properties such as adhesiveness, transparency, and durability are maintained equivalently to an unadded intermediate film without causing haze while the radio wave transmittance and the transparency are secured, and treatment for forming laminated glass can moreover be performed in operation in a common line for manufacturing laminated glass. When PVB is used for the intermediate film, lamination treatment is performed in a room at constant temperature and constant humidity to maintain the moisture content of the intermediate film optimally. An intermediate film, a part of which is colored, an intermediate film in which a layer having a sound insulation function is sandwiched, an intermediate film in which the thickness is oblique (wedge shape) to reduce a ghost phenomenon (double reflection) in the HUD, or the like can be used for the intermediate film.

Although the method for laminating the above-mentioned intermediate film with the above-mentioned optical functional film is not particularly limited, examples include a method for laminating an intermediate film with an optical functional film by press-fitting simultaneously using a nip roll. When the nip roll can be heated at the time of lamination, the intermediate film and the optical functional film can be press-fit during heating. When the adhesion between the intermediate film and the optical functional film is inferior, the lamination may be performed after surface treatment by corona treatment, plasma treatment, or the like is performed beforehand.

The intermediate film may be directly layered on one surface or both surfaces of the optical film with the intermediate film dissolved in a solvent. When a polyvinyl butyral-based resin (PVB) is used, it is preferable that the lower limit of the degree of butyralation be 40% by mol, it is more preferable that the lower limit be 55% by mol, and it is particularly preferable that the lower limit be 60% by mol. Meanwhile, it is preferable that the upper limit of the degree of butyralation be 85% by mol or more, it is more preferable that the upper limit be 80% by mol or more, and it is particularly preferable that the upper limit be 75% by mol or more. The degree of butyralation can be measured by an infrared absorption spectrum (IR) method, and for example, can be measured using an FT-IR.

It is preferable that the lower limit of the hydroxyl group amount of the polyvinyl butyral-based resin be 15% by mol, and it is preferable that the upper limit of the hydroxyl group amount of the polyvinyl butyral-based resin be 35% by mol. When the amount of the hydroxyl groups is less than 15% by mol, the adhesiveness between the intermediate film for laminated glass and glass may decrease, or the penetration resistance of the laminated glass may decrease. Meanwhile, when the amount of hydroxyl groups exceeds 35% by mol, the intermediate film may be hard.

The polyvinyl butyral-based resin can be prepared by acetalizing polyvinyl alcohol with an aldehyde. Polyvinyl alcohol is usually obtained by saponifying polyvinyl acetate, and polyvinyl alcohol having a saponification degree of 80% by mol or more and 99.8% by mol or less is generally used. It is preferable that the upper limit of the polymerization degree of polyvinyl alcohol be 4000, it is more preferable that the upper limit be 3000, and it is particularly preferable that the upper limit be 2500. When the polymerization degree exceeds 4000, the manufacturing of the intermediate film may be difficult.

[(C) Functional glass]

The above-mentioned optical functional film or the optical laminate and a glass plate are laminated in the functional glass of the present invention. Although the glass plate may be one or more, functional glass having a structure in which the above-mentioned optical functional film or optical laminate is clamped with two glass plates is preferable. Such functional glass is suitably used as a display medium in the HUD system.

The functional glass is manufactured, for example, by bonding the above-mentioned optical functional film or optical laminate onto the glass plate. As one example of the method for bonding an optical functional film or optical laminate onto a glass plate, the functional glass can be obtained by applying a pressure sensitive adhesive or an adhesive to one side or both sides of the optical functional film or optical laminate and subsequently bonding the glass plate or the glass plates. Although the pressure sensitive adhesive or the adhesive is not particularly limited, when the removal may be performed, a material which is excellent in reworkability, and has good adhesiveness, for example, a silicone pressure sensitive adhesive, an acrylic pressure sensitive adhesive, or the like, is preferable.

[Glass plate]

For example, even though the functional glass of the present invention is used as a windshield, the glass plate is not particularly limited in the case where the functional glass has transparency wherein the scene ahead can be fully confirmed visually. It is preferable that the refractive index of the glass plate be 1.2 or more and 2.0 or less, and it is more preferable that the refractive index be 1.4 or more and 1.8 or less. As long as the thickness, shape, and the like of the glass plate do not affect the reflection of display light, they are not particularly limited and can be suitably designed depending on the use. A reflection increasing film including a multilayer film and a metal thin film layer also having a heat shielding function may be provided on the reflective surface of the glass plate. These films can improve the reflectance of incident polarized light. For example, when the functional glass of the present invention is used as a windshield for cars, it is preferable to adjust the reflectance so that the visible light transmittance of the functional glass is 70% or more.

When the optical functional film or optical laminate of the present invention is used, functional glass in which an optical functional film or optical laminate is disposed in glass can be obtained by disposing the optical laminate between two glass plates for press-fitting at high temperature and high pressure. Fig. 4 shows one embodiment of the functional glass according to the present invention. Functional glass 20 shown in Fig. 4 has a configuration in which an optical laminate 10 is clamped with two glass plates 201. For example, the optical laminate 10 corresponds to the optical laminate in Fig. 3, and the optical functional film 101 is clamped with the two intermediate films 102. As shown in Fig. 4, when the optical laminate 10 forms the functional glass 20, the intermediate films 102 also have the function as a pressure sensitive adhesive or an adhesive for maintaining the adhesion between the two glass plates 201 and the optical laminate 10.

An example of the method of manufacturing functional glass using the optical functional film or optical laminate of the present invention will be described specifically. First, two glass plates are provided. When the glass plates are used as laminated glass for a windshield for a car, soda-lime glass made by the floating method is used. The glass may be either transparent glass and green-colored glass, and is not particularly limited. As to the thickness of these glass plates, around 2 mmt is usually employed; however, glass plates having a thickness a little thinner than this can also be used in response to requests for the weight reduction of glass in recent years. Glass plates are cut out in a predetermined shape, and the glass edges are chamfered off and washed. When a black print in a frame shape or a dot shape is required, this is printed on the glass plates. When a curved surface shape like a windshield is needed, the glass plates are heated at 650°C or more and then faired by pressing with a mold, bending by self weight, or the like so that the two sheets may be in the same surface shape, and the glass is cooled. When the cooling rate is too high at this time, stress distribution occurs in the glass plates, the glass plates become tempered glass, and the glass plates are therefore slowly cooled. One of the thus manufactured glass plates is placed horizontally, and an optical functional film or an optical laminate of the present invention is laid thereon, and the other glass plate is further placed. Subsequently, the optical functional film and the intermediate films protruded from the edges of the glass are cut and removed with a cutter. Then, heating is performed at a temperature of 80°C to 100°C while air existing between the glass plates and the optical functional film or the optical laminate laminated in the shape of a sandwich is deaerated, and preliminary adhesion is performed. As methods for deaerating air, there are two types which are the bag method, which are performed by wrapping the laminate of glass plate/ optical functional film or optical laminate/ glass plate in a rubber bag made of heat-resistant rubber or the like, and the ring method, in which sealing is performed by covering only the end portion of the glass plates with a rubber ring, and either may be used. After the completion of the preliminary adhesion, the laminate of glass plate/ optical functional film or optical laminate/ glass plate taken out of the rubber bag or the laminate from which the rubber ring is removed is placed in an autoclave, heated to 120°C to 150°C under a high pressure of 10 to 15 kg/cm$^2$, and subjected to heating and pressurization treatment for 20 minutes to 40 minutes under these conditions. After the treatment, the laminate is cooled to 50°C or less and then decompressed. Functional glass of the present invention including glass plate/ optical functional film or optical laminate/ glass plate is taken out of the autoclave.

The thus obtained functional glass can be used as windshields, side glasses, rear glasses, and roof glasses for standard-sized cars, small cars, light cars, and the like as well as a large-sized special cars and small special cars. Moreover, the functional glass can be used as windows for railcars, vessels, airplanes and as window materials for building materials and industrial uses. As a form of use, the functional glass can be used with the functional glass laminated onto or bonded onto members having a UV-blocking or a light control function.

[Head-up display system]

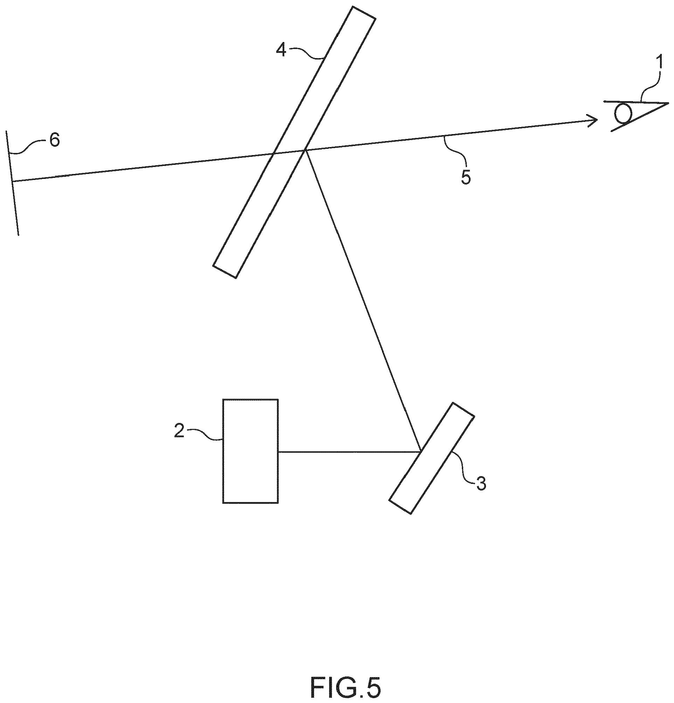

Fig. 5 is a schematic diagram showing one embodiment of the HUD system of the present invention. The HUD system shown in Fig. 5 includes display image projecting means (display) 2 which converts display light that shows a display image into S polarized light or P polarized light and emits the S polarized light or the P polarized light, a reflecting mirror 3 which reflects the display light emitted from the display image projecting means 2, and functional glass for a head-up display of the present invention in which the S polarized light or the P polarized light emitted from the display image projecting means 2 comes (functional glass 4). The S polarized light or the P polarized light reaches an observer 1 through an optical path 5 by reflecting the S polarized light or the P polarized light emitted from the display image projecting means 2 on the reflecting mirror 3 and irradiating the functional glass 4 which functions as a windshield with this reflected display light, and a virtual image 6 of a display image can be visually confirmed. Although, in the HUD system shown in Fig. 5, the display light emitted from the display image projecting means 2 comes into the functional glass 4 through the reflecting mirror 3, the display light may come into the functional glass 4 directly from the display image projecting means 2. Functional glass 4 may be irradiated with desired polarized light to which the polarized light emitted from the display image projecting means 2 is adjusted by emitting the display light which shows a display image as random light from the display image projecting means 2, reflecting the display light on the reflecting mirror 3, and passing this reflected light through a polarizing plate before this reflected light reaches the functional glass 4.

<Display image projecting means>

As long as the display image projecting means 2 can emit desired P polarized light or S polarized light until the desired P polarized light or S polarized light finally reaches the functional glass 4, the display image projecting means 2 is not particularly limited. The examples include liquid crystal displays (LCDs) and organic EL displays (OELDs). When the display image projecting means 2 is a liquid crystal display, emission light is usually linear polarized light, and can therefore be used as it is. Meanwhile, when the display image projecting means 2 is an organic EL display, for example, the display image projecting means 2 may include a light source and a polarizing plate which can emit P polarized light or S polarized light. When the HUD system is used for a car, optical members such as a polarizing plate and a 1/2 wavelength plate are disposed on a light-emitting opening such as a dashboard, and the liquid crystal display and the organic EL display can also be adjusted so that P polarized light or S polarized light can be emitted from the display image projecting means 2. The light source used for the display image projecting means 2 is not particularly limited, and the light source such as a laser light source, an LED source, or the like can be used. The display image can be clarified more effectively by setting the central reflection wavelength of a phase difference element forming the optical functional layer so that the central reflection wavelength corresponds to the emission spectrum of the above-mentioned light source.

<Reflecting mirror>

The HUD system of the present invention may include a reflecting mirror 3 if needed. As long as the reflecting mirror 3 can reflect display light from the display image projecting means toward the functional glass 4, the reflecting mirror 3 is not particularly limited. For example, the reflecting mirror 3 includes a plane mirror, a concave mirror, or the like. When a concave mirror is used as the reflecting mirror 3, the concave mirror can also magnify the display light from the display image projecting means at a predetermined magnifying power.

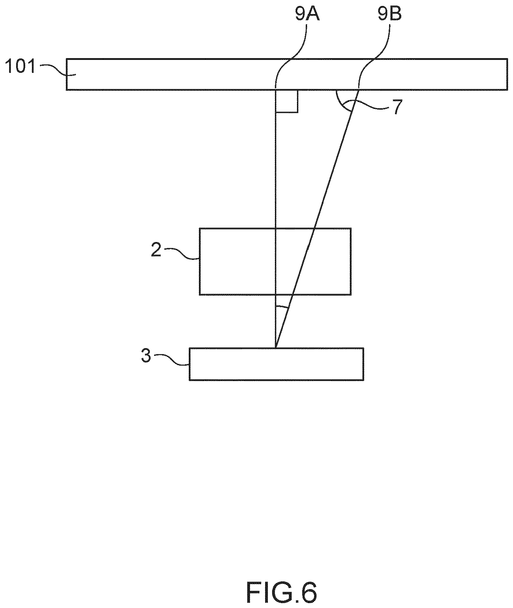

It is preferable that, in the HUD system of the present invention, an angle which a slow axis at an incidence angle of 90° such that light emitted from a display image projecting means comes into the optical functional film perpendicularly and a slow axis at an incidence angle of 80 such that light comes in from a position oblique at 10° to an axis perpendicular to the surface of the optical functional film in a horizontal direction, namely the range of the gap between the slow axis at an incidence angle of 90° and the slow axis at an incidence angle of 80° be 5° or more and 20° or less. As shown in Fig. 6, an incidence angle 7 means an angle which the surface of optical functional film 101 and light which comes into the surface of optical functional film 101 form. For example, when light emitted from the display image projecting means 2 comes into the front of the optical functional film 101, namely into the surface of the optical functional film 101 perpendicularly, through a reflecting mirror 3, the incidence angle 7 is 90°. When light comes in from a position oblique at 10° to an axis perpendicular to a surface of the optical functional film 101 right or left in a horizontal direction, the incidence angle 7 is 80°. That is, in Fig. 6, a configuration such that the gap between a slow axis angle in a display portion 9A and a slow axis angle in a display portion 9B is 5° or more and 20° or less is a preferable embodiment of the head-up display of the present invention. It is more preferable that the gap between the slow axis angle in the display portion 9A and the slow axis angle in the display portion 9B be 7° or more and 13° or less, and it is further preferable that the gap be 9° or more and 11° or less.

The present invention can improve a decrease in the polarized light conversion efficiency of the optical functional film due to the inclination of this incidence angle 7 by correcting the above-mentioned slow axes, and contributes to reduction in the formation of a double image. It is preferable that the lower limit of the angle which the slow axis at an incidence angle of 90° and the slow axis at an incidence angle of 80° form be 7°, it is further preferable that the lower limit be 8°, and it is particularly preferable that the lower limit be 9°. It is preferable that the upper limit of the angle which the slow axis at an incidence angle of 90° and the slow axis at an incidence angle of 80° form be 19°, it is further preferable that the lower limit be 18°, and it is particularly preferable that the lower limit be 17°. That is, it is the most preferable that the angle which the slow axis at an incidence angle of 90° and the slow axis at an incidence angle of 80° form be 8° or more and 17° or less.

Furthermore, it is preferable that, in the HUD system of the present invention, an angle which the slow axis at an incidence angle of 90° such that light emitted from the display image projecting means comes into the optical functional film perpendicularly and a slow axis at an incidence angle 70° such that light comes in from a position oblique at 20° to the axis perpendicular to the surface of the optical functional film in a horizontal direction, namely the range of the gap between the slow axis at an incidence angle of 90° and the slow axis at an incidence angle of 70° be 10° or more and 30° or less. It is further preferable that the lower limit of the angle which the slow axis at an incidence angle of 90° and the slow axis at an incidence angle of 70° form be 14°, and it is particularly preferable that the lower limit be 16°. It is further preferable that the upper limit of the angle which the slow axis at an incidence angle of 90° and the slow axis at an incidence angle of 70° form be 28°, and it is particularly preferable that the upper limit be 24°. That is, it is the most preferable that the angle which the slow axis at an incidence angle of 90° and the slow axis at an incidence angle of 70° form be 16° or more and 24° or less.

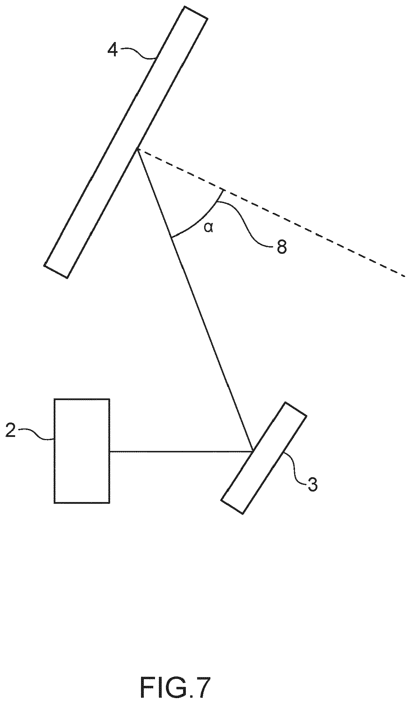

As shown in Fig. 7, when, in an HUD system according to the present invention, the Brewster angle of S polarized light or P polarized light to functional glass 4 is defined as $\alpha$, it is preferable that an incidence angle 8 at which light emitted from a display image projecting means 2 comes into functional glass 4 as a display medium be in the range of $\alpha$-10° to $\alpha$+10°, and it is more preferable that the incidence angle 8 be the range of $\alpha$-5° to $\alpha$+5°. As shown in Fig. 7, the incidence angle 8 means an angle which the axis perpendicular to the surface of a display medium (functional glass 4) and light which comes into the surface of the display medium form (this incidence angle is also hereinafter referred to as an "incidence angle X").

When, in one embodiment of the HUD system of the present invention, a 1/2 wavelength plate is used as an optical functional film, a display medium is functional glass 4, and display light emitted from a display image projecting means 2 is S polarized light, the reflection of P polarized light into which the S polarized light is converted by the functional glass 4 on a glass plate on the outer side of a car can be suppressed by making the S polarized light emitted from the display image projecting means 2 come in in the range of $\alpha$-10° to $\alpha$+10°, namely at an incidence angle 8 near the Brewster angle, preferably at an incidence angle 8 of the Brewster angle $\alpha$, to the axis perpendicular to the surface of functional glass 4 through a reflecting mirror 3, and the formation of a double image can be deterred. That is, when the incidence angle 8 of the S polarized light is less than $\alpha$-10° or more than $\alpha$+10°, the incidence angle 8 of the S polarized light is not near the Brewster angle, the reflection of the P polarized light into which the S polarized light is converted by the 1/2 wavelength plate therefore increases, and a double image may be formed.

Even when, in another embodiment of the HUD system of the present invention, a laminate in which one or more circularly polarized light reflecting layers (cholesteric liquid crystal layers) are clamped with two 1/4 wavelength plates is used as an optical functional film, an display medium is functional glass 4, and display light emitted from a display image projecting means 2 is P polarized light, the result is the same. Since reflected light from the road surface is generally S polarized light, polarization sunglasses are designed to be able to absorb S polarized light. In a conventional HUD system using S polarized light, the visibility of the display image in the HUD through polarization sunglasses therefore decreases extremely. Meanwhile, in the case of the HUD system in which P polarized light reaches the observer and which uses P polarized light, the formation of a double image can be suppressed, and the visibility of the display image can be enhanced also when the polarization sunglasses are worn. When the circularly polarized light reflecting layer is a cholesteric liquid crystal layer, circularly polarized light transmitted through the circularly polarized light reflecting layer is converted into the original P polarized light by the second 1/4 wavelength plate in which the slow axis is disposed so as to intersect at right angles to the slow axis of the first 1/4 wavelength plate. The converted P polarized light comes into the glass surface on the outer side of the car and outside the second 1/4 wavelength plate near the Brewster angle in the same way. Therefore, the reflection of the P polarized light on the glass surface on the outer side of the car and outside the second 1/4 wavelength plate can also be reduced greatly, and the formation of a double image is consequently improved greatly.

For example, when functional glass including an optical functional film including a 1/2 wavelength plate is provided in the head-up display system of the present invention, it is preferable that the angle $\theta$ which the slow axis of the optical functional film forms with the polarization axis of S polarized light or the polarization axis of P polarized light which comes in from an oblique position at 45° or more and 65° or less to the axis perpendicular to the surface of the functional glass be controlled to 35° or more and 47° or less to convert polarized light (to convert P polarized light into S polarized light or convert S polarized light into P polarized light) efficiently. When P polarized light comes into the functional glass, the reflectance on the surface of the functional glass can be theoretically suppressed to 2% or less by adjusting the incidence angle of S polarized light or P polarized light which comes into the functional glass to the range of 45° or more and 65° or less. Transmitted P polarized light is converted into S polarized light with the 1/2 wavelength plate, and the converted S polarized light is reflected on the interface between the functional glass on the side opposite to the incidence side and air. The reflected S polarized light is converted into P polarized light with the 1/2 wavelength plate again, and this P polarized light reaches an observer. When S polarized light comes into the functional glass, the S polarized light is reflected on the surface of the functional glass, and this S polarized light reaches the observer. Some of the transmitted S polarized light is converted into P polarized light with the 1/2 wavelength plate, the converted P polarized light is not reflected on the functional glass on the side opposite to the incidence side or the interface between the functional glass and air, and passes. Thus, the formation of a double image can be suppressed by controlling the incidence angle X of S polarized light or P polarized light which comes into the functional glass. When the angle $\theta$ is less than 35° or more than 47°, the polarization axis conversion performance for converting P polarized light which comes into the functional glass into S polarized light or converting S polarized light which comes into the functional glass into P polarized light is low, and a double image may consequently be formed. The 1/2 wavelength plate exhibits good polarization axis conversion performance by controlling this angle $\theta$ appropriately, and the display image can be consequently visually confirmed more clearly.

It is preferable that the angle $\theta$ be a value calculated from the following Expressions (2) and (3) to appropriately control the conversion performance of the polarization axis when the optical functional film includes a 1/2 wavelength plate. Here, the technical meaning of the following Expressions (2) and (3) will be described. When S polarized light or P polarized light which comes into the functional glass passes the 1/2 wavelength plate, which is a medium having a refractive index different from air, the incidence angle X at which the S polarized light or the P polarized light comes into the 1/2 wavelength plate changes. Here, when the incidence angle X which S polarized light or P polarized light forms with the functional glass is defined as $\alpha$, the incidence angle X at which the S polarized light or the P polarized light actually comes into the 1/2 wavelength plate, namely the refraction angle of the 1/2 wavelength plate is defined as $\beta$, the refractive index of air is defined as $n_{\alpha}$, and the refractive index of the 1/2 wavelength plate is defined as $n_{\beta}$, $\sin \alpha / \sin \beta = n_{\beta} / n_{\alpha}$ is valid according to Snell's law. When this expression is simplified to an equation in which $\beta$ is found, Expression

(3) is derived. Meanwhile, if a phase difference value when the polarization axis of S polarized light which comes into the functional glass is defined as the x-axis, the polarization axis of P polarized light is the y-axis, and an angle which the y-axis and the slow axis of the 1/2 wavelength plate form is defined as θ is Re, the y-axis is represented by Re•cos θ, and the x-axis is represented by Re•sin θ using vector analysis. Here, since it is known that the polarization axis conversion performance of the 1/2 wavelength plate is maximum when light comes in at 45° to the slow axis of the 1/2 wavelength plate, it is desirable that the incidence angle θ which the polarization axis of S polarized light or the polarization axis of P polarized light and the slow axis of the optical functional film form be theoretically 45°. However, as mentioned above, even though an angle which the polarization axis of S polarized light or P polarized light which comes into the functional glass and the slow axis of the optical functional film form is defined as θ, the angle at which the S polarized light or the P polarized light comes into the 1/2 polarizing plate is actually β. Then, when, as to the y-axis (theoretical y-axis) which is Re•cos θ, the y-axis inclined at an angle of β around the x-axis (actual y-axis) is found, Re•cos θ/actual y-axis = sin (90° - β) is valid, and the actual y-axis is represented by Re•cos θ cos β. As mentioned above, it is desirable that an angle which the slow axis of the 1/2 wavelength plate and the polarization axis of S polarized light or the polarization axis of P polarized light form be 45°. The x-axis (Re•sin θ) needs to be equal to the actual y-axis (Re•cos θ cos β) to adjust an angle which the polarization axis of the S polarized light or the P polarized light which comes into the functional glass and the slow axis of the 1/2 wavelength plate form to 45°. Therefore, Re•sin θ = Re•cos θ cos β is found, and Expression (2) is derived by simplifying this expression. Thus, the polarization axis conversion performance which the 1/2 wavelength plate exhibits can be utilized to the utmost by controlling the angle θ strictly using the relationship with the angle β at which the S polarized light or the P polarized light actually comes into the 1/2 polarizing plate based on a value calculated from the following Expressions (2) and (3).

[Expression 2]

$$\tan \theta = \cos \beta \qquad (2)$$

$$\beta = \sin^{-1}\left(\sin \alpha \cdot \frac{n_\alpha}{n_\beta}\right) \qquad (3)$$

θ     : Angle which slow axis of 1/2 wavelength plate and polarization axis of S polarized light or P polarized light which comes in at any incidence angle of α to functional glass form

α :    Incidence angle of S polarized light or P polarized light to functional glass

$n_\alpha$    : Refractive index of air

$n_\beta$     : Refractive index of 1/2 wavelength plate

It is preferable that the range of the angle θ be controlled to the range of the value of the angle θ ± 5°, and it is more preferable that the range of the angle θ be controlled to the range of the value of the angle θ ± 3°. When the angle θ is out of the range of an angle which satisfies a value calculated from Expressions (2) and (3) ± 5°, the polarization light conversion efficiency which the 1/2 wavelength plate exhibits decreases. A decrease in the polarization light conversion efficiency with the 1/2 wavelength plate can be suppressed by controlling the range of the angle θ based on the value calculated from Expressions (2) and (3).

As the refractive index of the 1/2 wavelength plate substituted for expression (3), the refractive index in the direction of the slow axis of the 1/2 wavelength plate is defined as nx, the refractive index in the direction at right angles to nx in the plane of the 1/2 wavelength plate is defined as ny, the refractive index in the thickness direction of the 1/2 wavelength plate is defined as nz, and a value obtained by averaging these is used as an average refractive index. When a 1/2 wavelength plate which is a commercial item is used, a value listed on a catalog or the like can also be used as the average refractive index. When the polymerizable liquid crystal described below is used as a material of the 1/2 wavelength plate, the average refractive index is represented by (nx + ny + nz)/3 = (no + no + ne)/3 using the original ordinary refractive index no and the extraordinary refractive index ne, of the liquid crystal. If specific examples of θ calculated from Expression (2) and (3) are given, for example, when the refractive index of air is defined as 1.00, a 1/2 wavelength plate having a refractive index of 1.55 is used, and the incidence angle X of S polarized light or P polarized light is 45°, the value of θ is 42° based on Expressions (2) and (3). Therefore, the range of θ is preferably 37° or more and 47° or less, and more preferably 39° or more and 45° or less. When the incidence angle X of S polarized light or P polarized light is 50°, the value of θ is 41° based on Expressions (2) and (3). Therefore, it is preferable that the range of θ be 36° or more and 46° or less, and it is more preferable that the range be 38° or more and 44° or less. When the incidence angle X of S polarized light or P polarized light is 56° or 60°, the value of θ is 40° based on Expressions (2) and (3). Therefore, it is preferable that the range of θ be 35° or more and 45° or less, and it is more preferable that the range be 37° or more and 43° or less. Furthermore, when the incidence angle X of S polarized light or P polarized light is 65°, the value of θ is 39° based on Expressions (2) and (3). Therefore, it is preferable that the range of θ be 34° or more and 44° or less, and it is more preferable that the range be 36° or more and 42° or less.

As mentioned above, in the present invention, the polarization axis conversion performance which 1/2 wavelength plate exhibits can be further improved by controlling the angle θ which the polarization axis of S polarized light or P polarized light which comes into an optical functional film and the slow axis of the 1/2 wavelength plate form. In such a case, it is particularly preferable to use a 1/2 wavelength plate including a polymerizable liquid crystal layer as a layer having the action of converting a polarization axis from the viewpoints of the controllability of the slow axis of the 1/2 wavelength plate and manufacturing cost. As long as the wavelength dispersibility of the 1/2 wavelength plate as described above is suitable for a head-up display use, the wavelength dispersibility is not particularly limited. To convert polarized light in a wide wavelength range in the visible light region accurately, it is however desirable that the 1/2 wavelength plate have reverse wavelength dispersibility. Although polymers generally have the normal dispersion, in which the absolute value of the birefringence increases on the short wavelength side, reverse wavelength dispersibility is obtained in the case of a liquid crystal compound such that the birefringence increases on the long wavelength side by controlling the value of the birefringence $\Delta n$ at each wavelength of visible light. Reverse wavelength dispersibility is also obtained by lamination in the combination of suitable slow axes of a plurality of phase difference plates having suitable phase difference values according to the wavelength dispersion characteristic of a compound. When the 1/2 wavelength plate by lamination in combination of such a plurality of phase difference plates is used, the 1/2 wavelength plate exhibits good polarization axis conversion performance by controlling the angle θ which the polarization axis of S polarized light or P polarized light which comes into the optical functional film and the slow axis of the 1/2 wavelength plate form appropriately as to the slow axis angle of each phase difference plate as described above, and a display image can be consequently visually confirmed further clearly.

Examples

Hereinafter, the present invention will be described in detail with Examples. In the Examples, "part" means "part by mass". As long as the present invention does not exceed the gist, the present invention is not limited to the following Examples. Unless otherwise specified, room temperature is in the range of 20°C ± 5°C.

<Test Example in the case of using 1/4 wavelength plate>

[Preparation of coating liquid (cholesteric liquid crystal composition)]

A coating liquid (R1), which has a composition shown in Table 1, was prepared.

[Table 1]

| Material (type) | Material name (maker name) | Prescribed amount (part) |
|---|---|---|
| Nematic liquid crystal monomer | LC242 (BASF Japan Ltd.) | 20.00 |
| Chiral agent | LC756 (BASF Japan Ltd.) | 1.54 |
| Photopolymerization initiator | IrgacureTPO (BASF Japan Ltd.) | 1.00 |
| Solvent | Cyclopentanone | 80.00 |

Thereafter, coating liquids (R2), (R3), and (R4) were prepared by the same prescription, respectively, except that the prescribed amount of the chiral agent in the coating liquid (R1) was changed into the prescribed amounts shown in Table 2.

[Table 2]

| Coating liquid | Chiral agent Prescribed amount (part) |
|---|---|
| Coating liquid (R2) | 1.26 |
| Coating liquid (R3) | 1.04 |
| Coating liquid (R4) | 0.70 |

A coating liquid (QWP), which was used for manufacturing a 1/4 wavelength plate, and has a composition shown in Table 3, was prepared .

[Table 3]

| Material (type) | Material name (maker name) | Prescribed amount (part) |
|---|---|---|
| Nematic liquid crystal monomer | LC242 (BASF Japan Ltd.) | 24.69 |
| Photopolymerization initiator | IrgacureTPO (BASF Japan Ltd.) | 1.23 |
| Solvent | Cyclopentanone | 74.07 |

[Example 1]

<Manufacturing of optical functional films>

A light reflecting layer PRL-1, a light reflecting layer PRL-2, a light reflecting layer PRL-3, and a light reflecting layer PRL-4 were manufactured in the following procedure using the prepared coating liquids (R1), (R2), (R3), and (R4), respectively. Subsequently, they were laminated to manufacture a circularly polarized light reflecting layer. Subsequently, 1/4 wavelength plates were further laminated on both surfaces of the obtained circularly polarized light reflecting layer to manufacture an optical control laminate. A PET film which is manufactured by TOYOBO CO., LTD. and in which a surface having no undercoat was rubbing-treated beforehand (trade name A4100, thickness: 50 $\mu$m) was used for a plastic substrate as a supporting substrate by a method described in the Example 1 of Japanese Patent Application Laid Open No. 2002-90743.

(1) The coating liquids (R1), (R2), (R3), and (R4), shown in Tables 1 and 2, were applied to the rubbing-treated surface of the PET films at room temperature using a wire bar so that the thicknesses of light reflecting layers obtained after drying were 0.5 $\mu$m, respectively.

(2) The obtained coating films were heated at 80°C for 2 minutes, and the solvent was removed to form cholesteric liquid crystal phases. Subsequently, UV irradiation was performed with a high-pressure mercury lamp (manufactured by HARISON TOSHIBA LIGHTING Corporation) at a generating power of 120 W for 5 to 10 seconds, the cholesteric liquid crystal phases were fixed to manufacture cholesteric liquid crystal layers based on the coating liquids (R1), (R2), (R3), and (R4), namely a light reflecting layer PRL-1, a light reflecting layer PRL-2, a light reflecting layer PRL-3, and a light reflecting layer PRL-4, were formed on the PET films, respectively.

(3) The coating liquid shown in Table 3 was applied to the rubbing-treated surfaces of the PET films at room temperature using the wire bar so that the thicknesses of the 1/4 wavelength plates obtained after drying were 1 $\mu$m. The surface of each PET film was subsequently divided into three regions which were P, Q, and R each having a width of 20 cm in the width direction from the left, a rubbing angle was set up so that an angle which the axis in the length direction (vertical axis) of the PET film and the slow axis of the 1/4 wavelength plate form was a predetermined angle in each region as shown in Table 4, and rubbing treatment was performed. The length direction is, for example, a longitudinal direction (short side) in Fig. 2, and the width direction is a transverse direction (long side). Hereinafter, the definition is the same.

[Table 4]

| Width position | Comparative Example 1 | Comparative Example 2 | Example 4 | Example 1 | Example 2 | Example 3 | Comparative Example 3 |
|---|---|---|---|---|---|---|---|
| | X(°) | | | | | | |
| | 1 | 2 | 3 | 4 | 5 | 6 | 7 |
| P | 35.0 | 35.0 | 35.0 | 35.0 | 35.0 | 35.0 | 35.0 |
| Q | 35.0 | 35.0 | 30.0 | 25.0 | 20.0 | 15.0 | 10.0 |
| R | 35.0 | 30.0 | 25.0 | 20.0 | 15.0 | 10.0 | 5.0 |
| | Y(°) | | | | | | |
| | 1 | 2 | 3 | 4 | 5 | 6 | 7 |
| P | 35.0 | 40.0 | 45.0 | 50.0 | 55.0 | 60.0 | 65.0 |
| Q | 35.0 | 35.0 | 40.0 | 45.0 | 50.0 | 55.0 | 60.0 |
| R | 35.0 | 35.0 | 35.0 | 35.0 | 35.0 | 35.0 | 35.0 |

(4) The obtained coating films were heated at 80°C for 2 minutes, and the solvent was removed to form liquid crystal phases. Subsequently, UV irradiation was performed with a high-pressure mercury lamp (manufactured by HARISON TOSHIBA LIGHTING Corporation) at a generating power of 120 W for 5 to 10 seconds, and the liquid crystal phases were fixed to manufacture a total of 14 1/4 wavelength plates in which the polymerizable liquid crystal layers were formed on the PET films and which have predetermined slow axis zones. The 1/4 wavelength plates were cut to a size having a width of 60 cm in the width direction and a length of 50 cm in the length direction and including all of the regions P, Q, and R. The slow axis zones which were the regions P, Q, and R each having a width of 20 cm in the width direction from the left are formed in the same plane (, and matched the areas shown in Table 4). The phase difference values of the regions of the obtained 1/4 wavelength plates were measured with an automatic birefringence meter ("KOBRA-21ADH" manufactured by Oji Scientific Instruments Co., Ltd.), and all the phase difference values at 546 nm were 136 nm.

(5) The light reflecting layer sides of the light reflecting layer PRL-1 (the coating liquid (R1) was used) and the light reflecting layer PRL-2 (the coating liquid (R2) was used) on the PET films manufactured at (1) to (2) were laminated using an acrylic pressure sensitive adhesive (produced by Soken Chemical & Engineering Co., Ltd., acrylics adhesive SK Dyne 906).

(6) The PET film on the light reflecting layer PRL-2 was exfoliated.

(7) The light reflecting layer side of the light reflecting layer PRL-3 (the coating liquid (R3) was used) on the PET film manufactured at (1) to (2) and the light reflecting layer PRL-2 at (6) were laminated on the light reflecting layer sides from which the PET films were exfoliated using the same acrylic pressure sensitive adhesive as the adhesive used at (5).

(8) The light reflecting layer side of the light reflecting layer PRL-4 (the coating liquid (R4) was used) was laminated on the light reflecting layer PRL-3 by the same method as at (7).

(9) The PET film outside the light reflecting layer PRL-1 and The PET film outside the PRL-4 were exfoliated to manufacture a circularly polarized light reflecting layer including four cholesteric liquid crystal layers.

(10) Then, 1/4 wavelength plates were laminated on both surfaces of the manufactured circularly polarized light reflecting layer through the same acrylic pressure sensitive adhesive as the pressure sensitive adhesive used at (5) using the 1/4 wavelength plates in which the slow axis angles in the regions P, Q, and R exhibited X-4 and Y-4 in Table 4, respectively as the polymerizable liquid crystal layers on the PET films manufactured at (3) to (4) with the width directions aligned so that the combination of the regions in the width directions in the planes was the combination of the P exhibiting X-4 and the R exhibiting Y-4; the Q exhibiting X-4 and the Q exhibiting Y-4; and the R exhibiting X-4 and the P exhibiting Y-4 in Table 4 with the polymerizable liquid crystal layer sides faced toward the circularly polarized light reflecting layer. Subsequently, the PET films of the 1/4 wavelength plates were exfoliated to perform the following measurements and evaluations.

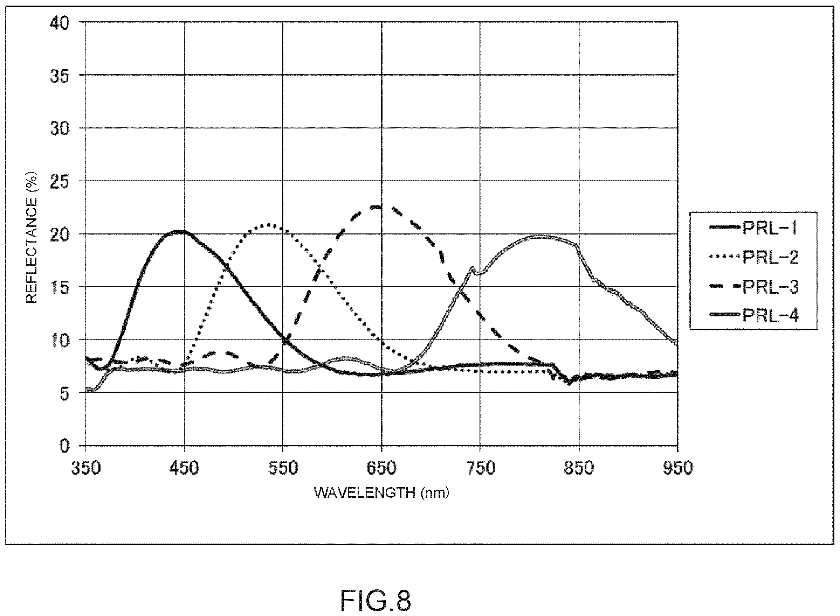

An optical functional film having the circularly polarized light reflecting layer laminated in order of the light reflecting layer PRL-1, the light reflecting layer PRL-2, the light reflecting layer PRL-3, and the light reflecting layer PRL-4 and the two 1/4 wavelength plates laminated on both surfaces of the circularly polarized light reflecting layer was thus manufactured. Fig. 8 is a figure obtained by plotting the relationship between the wavelength and the reflectance of the light reflecting layers when the single light reflecting layers PRL-1, PRL-2, PRL-3, and PRL-4 are formed. As shown in Fig. 8 and Table 5, the central reflection wavelengths of the light reflecting layer PRL-1, PRL-2, PRL-3, and PRL-4 were 450 nm (the half breadth was 123 nm), 540 nm (the half breadth was 131 nm), 650 nm (the half breadth was 148 nm), and 800 nm (the half breadth was 178 nm), respectively, and the reflectances at the central reflection wavelengths of the light reflecting layers PRL-1, PRL2, PRL-3, and PRL-4 were around 20%, around 21%, around 22%, and around 20%, respectively.

[Table 5]

| Light reflecting layer | PRL-1 | PRL-2 | PRL-3 | PRL-4 |
|---|---|---|---|---|
| Maximum reflectance (%) | 20.2 | 20.8 | 22.4 | 19.6 |
| Central reflection wavelength $\lambda 2$ (nm) | 450 | 540 | 650 | 800 |
| 50% wavelength on short wavelength side (nm) | 397 | 479 | 578 | 722 |
| 50% wavelength on long wavelength side (nm) | 520 | 610 | 726 | 900 |
| Half breadth (nm) | 123 | 131 | 148 | 178 |

The average transmittance of the visible light in the obtained light reflecting layers in the front direction (incidence angle: 0°) was around 77%, and the reflectances near 550 nm were around 22%. Even though each of the obtained light reflecting layers was seen from the position oblique to the front at 50°, there was no change in the transmittance in the red region, and each of the light reflecting layers had the same color tone as from the front direction. The phase difference value when each of the light reflecting layers was inclined at 50° was measured with an automatic birefringence meter ("KOBRA-21ADH" manufactured by Oji Scientific Instruments Co., Ltd.), and the phase difference value at 546 nm was consequently 55 nm.

<Manufacturing of optical laminate>

Transparent polyvinyl butyral intermediate films having a thickness of 0.38 mm and containing triethylene glycol di-2-ethylhexanoate as a plasticizer were cut out to the same size as the manufactured optical functional film. The manufactured optical functional film was disposed between the two polyvinyl butyral intermediate films. Subsequently, the optical functional film and the two polyvinyl butyral intermediate films were pressurized and press-fit with a laminator to manufacture an optical laminate.

<Manufacturing of functional glass>

The above-mentioned optical laminate was disposed between two glass plates each having the same size as the manufactured optical laminate and a thickness of 2 mm, and pressurization and heating are subsequently performed to manufacture functional glass. First, the above-mentioned optical laminate and a transparent glass plate were laid on a transparent glass plate sequentially. This was wrapped in a rubber bag, deaerated in an autoclave heated at 90°C for 10 minutes, and subjected to preliminary adhesion. This was cooled to room temperature, and this was then taken out of the rubber bag, and heated and pressurized in the autoclave at 135°C under a high pressure of 12 kg/cm$^2$ for 30 minutes again. Functional glass which had good appearance and in which the optical laminate was inserted was manufactured. The visible light transmittance of the obtained functional glass was 72%.

<Manufacturing of head-up display and evaluation of display image>

A head-up display was manufactured in the disposition as shown in Fig. 5. As the display image projecting means 2 and the reflecting mirror 3, a liquid crystal display panel which can emit P polarized light to the functional glass 4 was installed. As the functional glass 4, the functional glass manufactured above was used. The width direction of the optical functional film in the configuration of the functional glass 4 was adjusted so that P polarized light emitted from the display image projecting means 2 came in with the incidence angle X of the P polarized light adjusted to the Brewster angle (around 56°) to the functional glass 4 in a darkroom. When the glass on the 1/4 wavelength plate side including Y-4 in Table 4 was installed on a side into which P polarized light from the display image projecting means comes, and an image was projected, the display image was projected brightly and clearly.

<Evaluation of double image brightness ratio: evaluation of polarized light conversion performance of 1/4 wavelength plate>

A line drawing image was projected on the functional glass 4 under the condition that the line drawing image was emitted from an image projection device (display image projecting means 2) in P polarized light in the disposition shown in Fig. 7. The reflected image was photographed with a color brightness meter manufactured by KONICA MINOLTA, INC. (Prometric IC-PMI), and the display picture was evaluated. As to three points which were a position I 5 cm away from the left end (combination region of the P exhibiting X-4 and the R exhibiting Y-4), a position II 30 cm away from the left end (combination region of the Q exhibiting X-4 and the Q exhibiting Y-4), and a position III 43 cm away from the left end (combination region of the R exhibiting X-4 and the P exhibiting Y-4) in the width of 60 cm, the evaluation image at the position I was photographed from a point X which is 142 cm away from the glass surface perpendicularly to the glass surface with the position I defined as the starting point. The evaluation image at the position II was photographed from a position oblique to a perpendicular line from the point X to the position I at 10° to right with a brightness meter. The evaluation image at the position III was photographed from a position oblique to a perpendicular line from the point X to the position I at 15° to right with a brightness meter. The double image brightness ratio was calculated by multiplying a numerical value obtained by dividing the reflection brightness of the line drawing image on the optical functional film plane (the main image) by the reflection brightness of the line drawing image on the air interface of the glass on the side opposite to the image projection device (double image) in the configuration of functional glass by 100 by the analysis of the photographed images at the positions. The results are shown in Table 6. It can be determined that if the double image bright ratio shown in Table 6 is lower, the image projected on functional glass is hardly visually confirmed doubly, and the visibility of the image is good.

[Example 2]

An optical functional film, an optical laminate, and functional glass were manufactured in the same way as in Example 1 except that 1/4 wavelength plates in which the slow axis angles in the regions P, Q, and R exhibited X-5 and Y-5 in Table 4, respectively, were laminated on both surfaces of the circularly polarized light reflecting layer as to polymerizable liquid crystal layers on PET films manufactured at the above-mentioned (3) to (4). The double image brightness ratio was evaluated in the same way using the obtained functional glass. The results are shown in Table 6.

[Example 3]

An optical functional film, an optical laminate, and functional glass were manufactured in the same way as in Example 1 except that 1/4 wavelength plates in which the slow axis angles in the regions P, Q, and R exhibited X-6 and Y-6 in Table 4, respectively, were laminated on both surfaces of the circularly polarized light reflecting layer as to polymerizable liquid crystal layers on PET films manufactured at the above-mentioned (3) to (4). The double image brightness ratio was evaluated in the same way using the obtained functional glass. The results are shown in Table 6.

[Example 4]

An optical functional film, an optical laminate, and functional glass were manufactured in the same way as in Example 1 except that 1/4 wavelength plates in which the slow axis angles in the regions P, Q, and R exhibited X-3 and Y-3 in Table 4, respectively, were laminated on both surfaces of the circularly polarized light reflecting layer as to polymerizable liquid crystal layers on PET films manufactured at the above-mentioned (3) to (4). The double image brightness ratio was evaluated in the same way using the obtained functional glass. The results are shown in Table 6.

[Comparative Example 1]

An optical functional film, an optical laminate, and functional glass were manufactured in the same way as in Example 1 except that 1/4 wavelength plates in which the slow axis angles in the regions P, Q, and R exhibited X-1 and Y-1 in Table 4, respectively, were laminated on both surfaces of the circularly polarized light reflecting layer as to polymerizable liquid crystal layers on PET films manufactured at the above-mentioned (3) to (4). The double image brightness ratio was evaluated in the same way using the obtained functional glass. The results are shown in Table 6.

[Comparative Example 2]

An optical functional film, an optical laminate, and functional glass were manufactured in the same way as in Example 1 except that 1/4 wavelength plates in which the slow axis angles in the regions P, Q, and R exhibited X-2 and Y-2 in Table 4, respectively, were laminated on both surfaces of the circularly polarized light reflecting layer as to polymerizable liquid crystal layers on PET films manufactured at the above-mentioned (3) to (4). The double image brightness ratio was evaluated in the same way using the obtained functional glass. The results are shown in Table 6.

[Comparative Example 3]

An optical functional film, an optical laminate, and functional glass were manufactured in the same way as in Example 1 except that 1/4 wavelength plates in which the slow axis angles in the regions P, Q, and R exhibited X-7 and Y-7 in Table 4, respectively, were laminated on both surfaces of the circularly polarized light reflecting layer as to polymerizable liquid crystal layers on PET films manufactured at the above-mentioned (3) to (4). The double image brightness ratio was evaluated in the same way using the obtained functional glass. The results are shown in Table 6.

[Table 6]

| Evaluation position | Difference between slow axis angles (°) | | | Double image brightness ratio (%) | | |
|---|---|---|---|---|---|---|
| | P | Q | R | I | II | III |
| Example 1 | 0 | 10 | 15 | 0.4 | 0.9 | 1.1 |
| Example 2 | 0 | 15 | 20 | 0.4 | 0.9 | 0.8 |
| Example 3 | 0 | 20 | 25 | 0.4 | 2.1 | 3.2 |

(continued)

| | Difference between slow axis angles (°) | | | Double image brightness ratio (%) | | |
|---|---|---|---|---|---|---|
| Evaluation position | P | Q | R | I | II | III |
| Example 4 | 0 | 5 | 10 | 0.4 | 2.7 | 3.2 |
| Comparative Example 1 | 0 | 0 | 0 | 0.4 | 3.6 | 6.2 |
| Comparative Example 2 | 0 | 0 | 5 | 0.4 | 3.6 | 6 |
| Comparative Example 3 | 0 | 25 | 30 | 0.4 | 4.4 | 5.2 |

Since the difference between slow axis angles P is a standard, the difference P is defined as 0°.

The difference between slow axis angles Q is the difference between the slow axis angle in the region P and the slow axis angle in the region Q.

The difference between slow axis angles R is the difference between the slow axis angle In the region P and the slow axis angle In the region R.

From the results of Examples 1 to 4 and Comparative Examples 1 to 3, when, in Comparative Example 1, which does not have two or more slow axis zones different in slow axis angles in the same plane, and Comparative Examples 2 to 3, which even has two or more slow axis zones different in slow axis angles in the same plane and in which the maximum difference between slow axis angles is out of the range of more than 5° and less than 30°, P polarized light which comes in is transmitted through an optical functional film, an S polarized light component increases depending on the projection position, S polarized light is therefore reflected on the glass plate interface on the side opposite to the incidence plane. Therefore, the double image brightness ratio increases, and the image projected on functional glass is easily and visually confirmed doubly. A double image was consequently formed very unevenly, and the visibility of the image in a wide range decreased.

<Test Example 1 at the time of using 1/2 wavelength plates>

<Example 5>

The coating liquid shown in Table 3 was applied to the rubbing-treated surfaces of the PET films at room temperature using the wire bar at the above-mentioned (3) so that the thicknesses of 1/2 wavelength plates obtained after drying were around 2 $\mu$m, respectively. The surface of each PET film was divided into three regions which were P, Q, and R each having a width of 20 cm in the width direction from the left, a rubbing angle was set up so that an angle which the axis in the length direction (vertical axis) of the PET film and the slow axis of the 1/2 wavelength plate form was a predetermined angle in each region as shown in Table 7, and rubbing treatment was performed.

[Table 7]

| Width position | Com parative Example 4 | Comparative Example 5 | Example 8 | Example 5 | Example 6 | Example 7 | Com parative Example 6 |
|---|---|---|---|---|---|---|---|
| | X (°) | | | | | | |
| | 1 | 2 | 3 | 4 | 5 | 6 | 7 |
| P | 71.5 | 71.5 | 71.5 | 71.5 | 71.5 | 71.5 | 71.5 |
| Q | 71.5 | 71.5 | 71.5 | 71.5 | 71.5 | 71.5 | 71.5 |
| R | 71.5 | 76.5 | 81.5 | 86.5 | 91.5 | 96.5 | 101.5 |
| | Y(°) | | | | | | |
| | 1 | 2 | 3 | 4 | 5 | 6 | 7 |
| P | 26.5 | 21.5 | 16.5 | 11.5 | 6.5 | 1.5 | -3.5 |
| Q | 26.5 | 26.5 | 26.5 | 26.5 | 26.5 | 26.5 | 26.5 |
| R | 26.5 | 26.5 | 26.5 | 26.5 | 26.5 | 26.5 | 26.5 |

The obtained coating films were heated at 80°C for 2 minutes, and the solvent was removed to form liquid crystal phases. Subsequently, UV irradiation was performed with a high-pressure mercury lamp (manufactured by HARISON TOSHIBA LIGHTING Corporation) at a generating power of 120 W for 5 to 10 seconds, and the liquid crystal phases were fixed to manufacture a total of 14 1/2 wavelength plates wherein the 1/2 wavelength plates are divided into the two types, an X group and a Y group, each including 7 1/2 wavelength plates, the polymerizable liquid crystal layers were formed on the PET films, and the 1/2 wavelength plates have predetermined slow axis zones. The 1/2 wavelength plates were cut to a size having a width of 60 cm in the width direction and a length of 50 cm in the length direction and including all of the regions P, Q, and R. The slow axis zones which are P, Q, and R each having a width of 20 cm in the width direction from the left were formed in the same plane (, and match the areas shown in Table 7). The phase difference values of the regions of the obtained 1/2 wavelength plates were measured with an automatic birefringence meter ("KOBRA-21ADH" manufactured by Oji Scientific Instruments Co., Ltd.), so that the phase difference values of the 7 1/2 wavelength plates in the group X at 546 nm were 290 nm, and the phase difference values of the 7 1/2 wavelength plates in the group Y at 546 nm were 250 nm.

The polymerizable liquid crystal layers of the 1/2 wavelength plates were laminated on each other with the same acrylic pressure sensitive adhesive as the pressure sensitive adhesive used in the above-mentioned (5) using the 1/2 wavelength plates in which the slow axis angles in the regions P, Q, and R exhibited X-4 and Y-4 in Table 4, respectively as the manufactured polymerizable liquid crystal layers on the PET films with the width directions aligned so that the combination of the regions in the width directions in the planes was the combination of the P exhibiting X-4 and the R exhibiting Y-4; the Q exhibiting X-4 and the Q exhibiting Y-4; and the R exhibiting X-4 and the P exhibiting Y-4. Subsequently, the PET films of the 1/2 wavelength plates were exfoliated to perform the following measurements and evaluations.

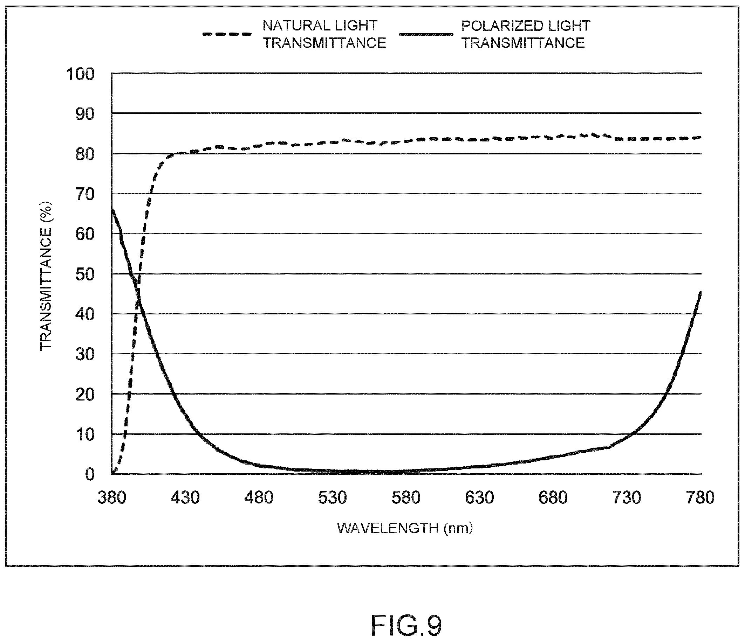

An optical functional film in which the two 1/2 wavelength plate were laminated was thus manufactured. The spectral characteristics of the natural light transmittance and the polarized light transmittance of the obtained two-layer 1/2 wavelength plate were measured, and the results are shown in Fig. 9. In the two-layer 1/2 wavelength plate, the average transmittance in the visible light wavelength region in the front direction (incidence angle: 56°) was around 79%, and the polarized light transmittance was around 10%. The polarized light transmittance was measured using the "ultraviolet, visible, and near-infrared spectrophotometer UV-3600" manufactured by SHIMADZU CORPORATION with the two-layer 1/2 wavelength plate set between paralleled polarizing plates so that the incidence angle was 56°.

<Manufacturing of optical laminate>

Transparent polyvinyl butyral intermediate films having a thickness of 0.38 mm and containing triethylene glycol di-2-ethylhexanoate as a plasticizer were cut out to the same size as the manufactured two-layer 1/2 wavelength plate. The above-mentioned two-layer 1/2 wavelength plate was disposed between the two polyvinyl butyral intermediate films. Subsequently, the two-layer 1/2 wavelength plate and the two polyvinyl butyral intermediate films were pressurized and press-fit with a laminator to manufacture an optical laminate.

<Manufacturing of functional glass>

The above-mentioned optical laminate was disposed between two glass plates each having the same size as the manufactured two-layer 1/2 wavelength plate and a thickness of 2 mm, and pressurization and heating are subsequently performed to obtain functional glass. First, the above-mentioned optical laminate and a transparent glass plate were laid on a transparent glass plate sequentially. This was wrapped in a rubber bag, deaerated in an autoclave heated at 90°C for 10 minutes, and subjected to preliminary adhesion. This was cooled to room temperature, and this was then taken out of the rubber bag, and heated and pressurized in the autoclave at 135°C under a high pressure of 12 kg/cm$^2$ for 30 minutes again. Functional glass which had good appearance and in which the optical laminate was inserted was manufactured. The average transmittance of the obtained functional glass in the visible light region in the front direction (incidence angle: 56°) was around 72%. The polarized light transmittance was around 6%.

<Manufacturing of head-up display and evaluation of display image>

A head-up display was manufactured in the disposition as shown in Fig. 5. As the display image projecting means 2 and the reflecting mirror 3, a liquid crystal display panel which can emit S polarized light to the functional glass 4 was installed. As the functional glass 4, the functional glass manufactured above was used. The width direction of the optical functional film in the configuration of the functional glass 4 was adjusted so that S polarized light emitted from the display image projecting means 2 came in with the incidence angle X of the S polarized light adjusted to the Brewster angle (around 56°) to the functional glass 4 in a darkroom. When the glass on the 1/2 wavelength plate side including the Y group in Table 7 was installed on a side on which S polarized light was emitted from the display image projecting means, and an image was projected, the display image was projected brightly and clearly.

<Evaluation of double image brightness ratio: evaluation of polarized light conversion performance of 1/2 wavelength plate>

A line drawing image was projected on the functional glass 4 under the condition that the line drawing image was emitted from an image projection device (display image projecting means 2) in S polarized light in the disposition shown in Fig. 7. The reflected image was photographed with a color brightness meter manufactured by KONICA MINOLTA, INC. (Prometric IC-PMI), and the display image was evaluated. As to three points which were a position I 5 cm away from the left end (combination region of the P exhibiting X-4 and the R exhibiting Y-4), a position II 30 cm away from the left end (combination region of the Q exhibiting X-4 and the Q exhibiting Y-4), and a position III 43 cm away from the left end (combination region of the R exhibiting X-4 and the P exhibiting Y-4) in the width of 60 cm, the evaluation image at the position I was photographed from a point X which is 142 cm away from the glass surface perpendicularly to the glass surface with the position I defined as the starting point. The evaluation image at the position II was photographed from a position oblique to a perpendicular line from the point X to the position I at 10° to right with a brightness meter. The evaluation image at the position III was photographed from a position oblique to the perpendicular line from the point X to the position I at 15° to right with a brightness meter. The double image brightness ratio was calculated by multiplying a numerical value obtained by dividing the reflection brightness of the line drawing image on the air interface of the glass on the image projection device side (the main image) by the reflection brightness of the line drawing image on the air interface of the glass on the side opposite to the image projection device (double image) in the configuration of functional glass by 100 by the analysis of the photographed images at the positions. The results are shown in Table 8. It can be determined that if the double image bright ratio shown in Table 8 is lower, the image projected on functional glass is hardly visually confirmed doubly, and the visibility of the image is good.

[Example 6]

An optical functional film, an optical laminate, and functional glass were manufactured in the same way as in Example 5 except that 1/2 wavelength plates in which the slow axis angles in the regions P, Q, and R exhibited X-5 and Y-5 in Table 7, respectively, were laminated as to polymerizable liquid crystal layers on PET films. The double image brightness ratio was evaluated in the same way using the obtained functional glass. The results are shown in Table 8.

[Example 7]

An optical functional film, an optical laminate, and functional glass were manufactured in the same way as in Example 5 except that 1/2 wavelength plates in which the slow axis angles in the regions P, Q, and R exhibited X-6 and Y-6 in Table 7, respectively, were laminated as to polymerizable liquid crystal layers on PET films. The double image brightness ratio was evaluated in the same way using the obtained functional glass. The results are shown in Table 8.

[Example 8]

An optical functional film, an optical laminate, and functional glass were manufactured in the same way as in Example 5 except that 1/2 wavelength plates in which the slow axis angles in the regions P, Q, and R exhibited X-3 and Y-3 in Table 7, respectively, were laminated as to polymerizable liquid crystal layers on PET films. The double image brightness ratio was evaluated in the same way using the obtained functional glass. The results are shown in Table 8.

[Comparative Example 4]

An optical functional film, an optical laminate, and functional glass were manufactured in the same way as in Example 5 except that 1/2 wavelength plates in which the slow axis angles in the regions P, Q, and R exhibited X-1 and Y-1 in Table 7, respectively, were laminated as to polymerizable liquid crystal layers on PET films. The double image brightness ratio was evaluated in the same way using the obtained functional glass. The results are shown in Table 8.

[Comparative Example 5]

An optical functional film, an optical laminate, and functional glass were manufactured in the same way as in Example 5 except that 1/2 wavelength plates in which the slow axis angles in the regions P, Q, and R exhibited X-2 and Y-2 in Table 7, respectively, were laminated as to polymerizable liquid crystal layers on PET films. The double image brightness ratio was evaluated in the same way using the obtained functional glass. The results are shown in Table 8.

[Comparative Example 6]

An optical functional film, an optical laminate, and functional glass were manufactured in the same way as in Example 5 except that 1/2 wavelength plates in which the slow axis angles in the regions P, Q, and R exhibited X-7 and Y-7 in Table 7, respectively, were laminated as to polymerizable liquid crystal layers on PET films. The double image brightness ratio was evaluated in the same way using the obtained functional glass. The results are shown in Table 8.

[Table 8]

| Evaluation position | Difference between slow axis angles (°) | | | Double image brightness ratio (%) | | |
|---|---|---|---|---|---|---|
| | P | Q | R | I | II | III |
| Example 5 | 0 | 0 | 15 | 0.2 | 0.9 | 1.4 |
| Example 6 | 0 | 0 | 20 | 0.2 | 0.9 | 0.4 |
| Example 7 | 0 | 0 | 25 | 0.2 | 0.9 | 1.2 |
| Example 8 | 0 | 0 | 10 | 0.2 | 0.9 | 1.8 |
| Comparative Example 4 | 0 | 0 | 0 | 0.2 | 0.9 | 2.6 |
| Comparative Example 5 | 0 | 0 | 5 | 0.2 | 0.9 | 2.2 |
| Comparative Example 6 | 0 | 0 | 30 | 0.2 | 0.9 | 2.6 |

**Since the difference between slow axis angles P is a standard, the difference P is defined as 0°.**
**The difference between slow axis angles Q is the difference between the slow axis angle in the region P and the slow axis angle in the region Q.**
**The difference between slow axis angles R is the difference f between the slow axis angle in the region P and the slow axis angle in the region R.**

From the results of Examples 5 to 8 and Comparative Examples 4 to 6, when, in Comparative Example 4, which does not have two or more slow axis zones different in slow axis angles in the same plane, and Comparative Examples 5 to 6, which even has two or more slow axis zones different in slow axis angles in the same plane and in which the maximum difference between slow axis angles is out of the range of more than 5° and less than 30°, S polarized light which comes in is transmitted through an optical functional film, a large amount of an S polarized light component remains without being converted into P polarized light depending on the projection position, S polarized light is therefore reflected on the air interface of the glass plate on the side opposite to the incidence plane. Therefore, the double image brightness ratio increases, and the image projected on functional glass is easily and visually confirmed doubly. A double image was consequently formed very unevenly, and the visibility of the image in a wide range decreased.

<Test Example 2 at the time of using 1/2 wavelength plate>

<Example 9>

The coating liquid shown in Table 3 was applied to the rubbing-treated surfaces of the PET films at room temperature using the wire bar at the above-mentioned (3) so that the thicknesses of 1/2 wavelength plates obtained after drying were around 2 $\mu$m, respectively. The surface of each PET film was divided into three regions which were P, Q, and R each having a width of 20 cm in the width direction from the left, a rubbing angle was set up so that an angle which the axis in the length direction (vertical axis) of the PET film and the slow axis of the 1/2 wavelength plate form was a predetermined angle in each region as shown in Table 9, and rubbing treatment was performed.

[Table 9]

| Width position | Comparative Example 7 | Comparative Example 8 | Example 12 | Example 9 | Example 10 | Example 11 |
|---|---|---|---|---|---|---|
| | X (°) | | | | | |
| | 1 | 2 | 3 | 4 | 5 | 6 |
| P | 50.0 | 50.0 | 50.0 | 50.0 | 50.0 | 50.0 |
| Q | 50.0 | 50.0 | 52.0 | 55.0 | 58.0 | 52.0 |
| R | 50.0 | 55.0 | 63.0 | 60.0 | 63.0 | 57.0 |

The obtained coating films were heated at 80°C for 2 minutes, and the solvent was removed to form liquid crystal phases. Subsequently, UV irradiation was performed with a high-pressure mercury lamp (manufactured by HARISON TOSHIBA LIGHTING Corporation) at a generating power of 120 W for 5 to 10 seconds, and the liquid crystal phases were fixed to manufacture a total of 7 1/2 wavelength plates in which the polymerizable liquid crystal layers were formed on the PET films and which have predetermined slow axis zones. The 1/2 wavelength plates were cut to a size having a width of 60 cm in the width direction and a length of 50 cm in the length direction and including all of the regions P, Q, and R. Slow axis zones which are P, Q, and R each having a width of 20 cm in the width direction from the left were formed in the same plane (, and match the areas shown in Table 9). The phase difference values of the regions of the obtained 1/2 wavelength plates were measured with an automatic birefringence meter ("KOBRA-21ADH" manufactured by Oji Scientific Instruments Co., Ltd.), so that the phase difference values at 546 nm were 275 nm.

The polymerizable liquid crystal layer of a 1/2 wavelength plate was pasted on a flat glass plate having the same size as the 1/2 wavelength plate and a thickness of 2 mm with the same acrylic pressure sensitive adhesive as the pressure sensitive adhesive used at the above-mentioned (5) applied to the polymerizable liquid crystal layer using the 1/2 wavelength plate in which the slow axis angles in the regions P, Q, and R exhibited X-4 in Table 9, respectively as the manufactured polymerizable liquid crystal layer on the PET film. Subsequently, the PET film of the 1/2 wavelength plate was exfoliated to perform the following measurements and evaluations.

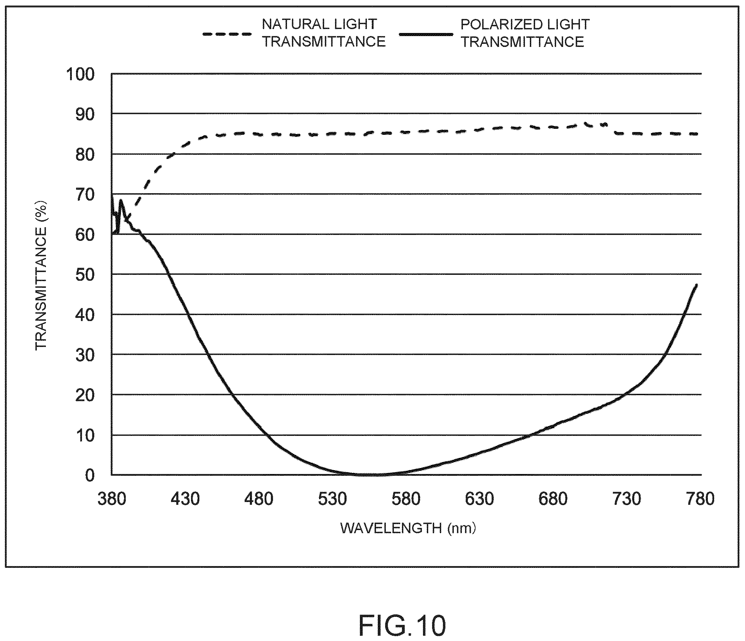

An optical functional film including one 1/2 wavelength plate was thus manufactured. The spectral characteristics of the natural light transmittance and the polarized light transmittance of the obtained 1/2 wavelength plate were measured, and the results are shown in Fig. 10. In the obtained 1/2 wavelength plate, the average transmittance in the visible light wavelength region in the front direction (incidence angle: 56°) was around 84%, and the polarized light transmittance was around 18%. The polarized light transmittance was measured using the "ultraviolet, visible, and near-infrared spectrophotometer UV-3600" manufactured by SHIMADZU CORPORATION with the 1/2 wavelength plate set between paralleled polarizing plates so that the incidence angle was 56°.

<Manufacturing of optical laminate>

A transparent polyvinyl butyral intermediate film having a thickness of 0.38 mm and containing triethylene glycol di-2-ethylhexanoate as a plasticizer was cut out to the same size as the manufactured 1/2 wavelength plate. The one polyvinyl butyral intermediate film was disposed on the polymerizable liquid layer side of the above-mentioned 1/2 wavelength plate. Subsequently, the 1/2 wavelength plate and the polyvinyl butyral intermediate film were pressurized and press-fit with a laminator to obtain an optical laminate.

<Manufacturing of functional glass>

The polyvinyl butyral intermediate film side of the manufactured optical laminate was disposed on one glass plate having the same size as the 1/2 wavelength plate and a thickness of 2 mm, and pressurization and heating are subsequently performed to obtain functional glass. First, the above-mentioned optical laminate was laid on a transparent glass plate. This was wrapped in a rubber bag, deaerated in an autoclave heated at 90°C for 10 minutes, and subjected to preliminary adhesion. This was cooled to room temperature, and this was then taken out of the rubber bag, and heated and pressurized in the autoclave at 135°C under a high pressure of 12 kg/cm$^2$ for 30 minutes again. Functional glass which had good appearance and in which the optical laminate was inserted was manufactured. The average transmittance of the obtained functional glass in the visible light region in the front direction (incidence angle: 56°) was around 73%. The polarized light transmittance was around 14%.

<Manufacturing of head-up display and evaluation of display image>

A head-up display was manufactured in the disposition as shown in Fig. 5. As the display image projecting means 2 and the reflecting mirror 3, a liquid crystal display panel which can emit S polarized light to the functional glass 4 was installed. As the functional glass 4, the functional glass manufactured above was used. The width direction of the optical functional film in the configuration of the functional glass 4 was adjusted so that S polarized light emitted from the display image projecting means 2 came in with the incidence angle X of the S polarized light adjusted to the Brewster angle (around 56°) to the functional glass 4 in a darkroom. When the glass on the 1/2 wavelength plate side including X-4 in Table 9 was installed on a side on which S polarized light was emitted from the display image projecting means, and an image was projected, the display image was projected brightly and clearly.

<Evaluation of double image brightness ratio: evaluation of polarized light conversion performance of 1/2 wavelength plate>

A line drawing image was projected on the functional glass 4 under the condition that the line drawing image was emitted from an image projection device (display image projecting means 2) in S polarized light in the disposition shown in Fig. 7. The reflected image was photographed with a color brightness meter manufactured by KONICA MINOLTA, INC. (Prometric IC-PMI), and the display image was evaluated. As to three points which were a position I 18 cm away from the left end (region of the P exhibiting X-4), a position II 30.5 cm away from the left end (region of the Q exhibiting X-4), and a position III 43 cm away from the left end (region of the R exhibiting X) in the width of 60 cm, the evaluation image at the position I was photographed from a point X which is 142 cm away from the glass surface perpendicularly to the glass surface with the position I defined as the starting point. The evaluation image at the position II was photographed from a position oblique to a perpendicular line from the point X to the position I at 5° to right with a brightness meter. The evaluation image at the position III was photographed from a position oblique to a perpendicular line from the point X to the position I at 10° to right with a brightness meter. The double image brightness ratio was calculated by multiplying a numerical value obtained by dividing the reflection brightness of the line drawing image on the air interface of the glass on the image projection device side (the main image) by the reflection brightness of the line drawing image on the air interface of the glass on the side opposite to the image projection device (double image) in the configuration of functional glass by 100 by the analysis of the photographed images at the positions. The results are shown in Table 10. It can be determined that if the double image bright ratio shown in Table 10 is lower, the image projected on functional glass is hardly visually confirmed doubly, and the visibility of the image is good.

[Example 10]

An optical functional film, an optical laminate, and functional glass were manufactured in the same way as in Example 9 except that a 1/2 wavelength plate in which the slow axis angles in the regions P, Q, and R exhibited X-5 in Table 9, respectively, was used as to a polymerizable liquid crystal layer on a PET film. The double image brightness ratio was evaluated in the same way using the obtained functional glass. The results are shown in Table 10.

[Example 11]

An optical functional film, an optical laminate, and functional glass were manufactured in the same way as in Example 9 except that a 1/2 wavelength plate in which the slow axis angles in the regions P, Q, and R exhibited X-6 in Table 9, respectively, was used as to a polymerizable liquid crystal layer on a PET film. The double image brightness ratio was evaluated in the same way using the obtained functional glass. The results are shown in Table 10.

[Example 12]

An optical functional film, an optical laminate, and functional glass were manufactured in the same way as in Example 9 except that a 1/2 wavelength plate in which the slow axis angles in the regions P, Q, and R exhibited X-3 in Table 9, respectively, was used as to a polymerizable liquid crystal layer on a PET film. The double image brightness ratio was evaluated in the same way using the obtained functional glass. The results are shown in Table 10.

[Comparative Example 7]

An optical functional film, an optical laminate, and functional glass were manufactured in the same way as in Example 9 except that a 1/2 wavelength plate in which the slow axis angles in the regions P, Q, and R exhibited X-1 in Table 9, respectively, was used as to a polymerizable liquid crystal layer on a PET film. The double image brightness ratio was evaluated in the same way using the obtained functional glass. The results are shown in Table 10.

[Comparative Example 8]

An optical functional film, an optical laminate, and functional glass were manufactured in the same way as in Example 9 except that a 1/2 wavelength plate in which the slow axis angles in the regions P, Q, and R exhibited X-2 in Table 9, respectively, was used as to a polymerizable liquid crystal layer on a PET film. The double image brightness ratio was evaluated in the same way using the obtained functional glass. The results are shown in Table 10.

[Table 10]

| Evaluation position | Difference between slow axis angles (°) | | | Double image brightness ratio (%) | | |
|---|---|---|---|---|---|---|
| | P | Q | R | I | II | III |
| Example 9 | 0 | 5 | 10 | 1.3 | 1.5 | 1.7 |
| Example 10 | 0 | 8 | 13 | 1.3 | 1.8 | 1.9 |
| Example 11 | 0 | 2 | 7 | 1.3 | 1.8 | 1.9 |
| Example 12 | 0 | 8 | 13 | 1.3 | 1.8 | 1.9 |
| Com parative Example 7 | 0 | 0 | 0 | 1.3 | 2.5 | 4.3 |
| Com parative Example 8 | 0 | 0 | 5 | 1.3 | 2.5 | 2.7 |

**Since the difference between slow axis angles P is a standard, the difference P is defined as 0°**
**The difference between slow axis angles Q is the difference between the slow axis angle in the region P and the slow axis angle in the region Q.**
**The difference between slow axis angles R is the difference between the slow axis angle in the region P and the slow axis angle in the region R.**

From the results of Examples 9 to 12 and Comparative Examples 7 to 8, when, in Comparative Example 7, which does not have two or more slow axis zones different in slow axis angles in the same plane, and Comparative Example 8, which even has two or more slow axis zones different in slow axis angles in the same plane and in which the maximum difference between slow axis angles is out of the range of more than 5° and less than 30°, S polarized light which comes in is transmitted through an optical functional film, a large amount of an S polarized light component remains without being converted into P polarized light depending on the projection position, S polarized light is therefore reflected on the air interface of the glass plate on the side opposite to the incidence plane. Therefore, the double image brightness ratio increases, and the image projected on functional glass is easily and visually confirmed doubly. A double image was consequently formed very unevenly, and the visibility of the image in a wide range decreased.

As mentioned above, S polarized light or P polarized light which come in at any incidence angle can be more efficiently returned to the original S polarized light or P polarized light using an optical functional film for a head-up display according to the present invention. It is therefore found that the optical functional film which exhibits the polarized light conversion efficiency excellent in a wide range has been obtained. A very clear display image can be visually confirmed in a wide range by applying the optical functional film according to the present invention to a HUD system.

Industrial Applicability

A head-up display system including an optical functional film of the present invention can remove the unevenness of the formation of a double image depending on the projection position, namely, can suppress the formation of a double image independently of the photographing position. Therefore, viewers can use the head-up display system without stress.

List of Reference Signs

1: Observer
2: Display image projecting means

3: Reflecting mirror
4: Functional glass
5: Optical path
6: Virtual image
7: Incidence angle
8: Incidence angle
9A: Display portion
9B: Display portion
10: Optical laminate
101: Optical functional film
102: Intermediate film
20: Functional glass
201: Glass plate
30: Optical functional film
31: Slow axis angle in slow axis zone A
32: Slow axis in slow axis zone A
33: Slow axis angle in slow axis zone B
34: Slow axis in slow axis zone B
40: Optical functional film
41: Slow axis angle in slow axis zone C
42: Slow axis in slow axis zone C
43: Slow axis angle in slow axis zone D
44: Slow axis in slow axis zone D
45: Slow axis angle in slow axis zone E
46: Slow axis in slow axis zone E

**Claims**

1. An optical functional film for a head-up display, having two or more slow axis zones different in slow axis angles in the same plane, wherein a maximum difference between slow axis angles is more than 5° and less than 30°.

2. The optical functional film according to claim 1, wherein the maximum difference between the slow axis angles is 10° or more and 25° or less.

3. An optical laminate for a head-up display, comprising: the optical functional film according to claim 1 or 2; and an intermediate film.

4. Functional glass for a head-up display, comprising: the optical functional film according to claim 1 or 2 or the optical laminate according to claim 3; and a glass plate.

5. A head-up display system, comprising the optical functional film according to claim 1 or 2, the optical laminate according to claim 3, or the functional glass according to claim 4.

6. The head-up display system according to claim 5, wherein an angle which a slow axis at an incidence angle of 90° such that light emitted from display image projecting means comes into the optical functional film perpendicularly and a slow axis at an incidence angle of 80° such that the light comes in from a position oblique at 10° to an axis perpendicular to a surface of the optical functional film in a horizontal direction is 5° or more and 20° or less.

7. The head-up display system according to claim 5 or 6, wherein an angle which the slow axis at an incidence angle of 90° such that light emitted from the display image projecting means comes into the optical functional film perpendicularly and a slow axis at an incidence angle of 70° such that the light comes in from a position oblique at 20° to the axis perpendicular to the surface of the optical functional film in the horizontal direction is 10° or more and 30° or less.

8. The head-up display system according to any one of claims 5 to 7, comprising the functional glass, wherein an incidence angle at which light emitted from the display image projecting means comes into the functional glass is in the range of $\alpha$-10° to $\alpha$+10° to a Brewster angle $\alpha$.

FIG.1

FIG.2

102
101 } 10
102

FIG.3

201
10 } 20
201

FIG.4

FIG.5

FIG.6

FIG.7

FIG.8

FIG.9

FIG.10

EP 4 099 084 A1

## INTERNATIONAL SEARCH REPORT

| | International application No. |
|---|---|
| | PCT/JP2021/003333 |

A.  CLASSIFICATION OF SUBJECT MATTER
G02B 27/01(2006.01)i; B32B 7/023(2019.01)i; B32B 17/10(2006.01)i; B60K
35/00(2006.01)i; C03C 27/12(2006.01)i; G02B 5/30(2006.01)i
FI: G02B27/01; C03C27/12 K; B32B7/023; B32B17/10; B60K35/00 A; G02B5/30
According to International Patent Classification (IPC) or to both national classification and IPC

B.  FIELDS SEARCHED

Minimum documentation searched (classification system followed by classification symbols)
G02B27/01; B32B7/023; B32B17/10; B60K35/00; C03C27/12; G02B5/30

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2018-17839 A (NIPPON KAYAKU CO., LTD.) 01 February 2018 (2018-02-01) entire text, all drawings | 1-8 |
| A | JP 2000-249966 A (CENTRAL GLASS CO., LTD.) 14 September 2000 (2000-09-14) entire text, all drawings | 1-8 |
| A | JP 2012-163786 A (JVC KENWOOD CORPORATION) 30 August 2012 (2012-08-30) entire text, all drawings | 1-8 |
| A | WO 2013/145550 A1 (ARISAWA MANUFACTURING CO., LTD.) 03 October 2013 (2013-10-03) entire text, all drawings | 1-8 |

☐  Further documents are listed in the continuation of Box C.  ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 March 2021 (30.03.2021) | 13 April 2021 (13.04.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application no. |
|---|
| PCT/JP2021/003333 |

| Patent Documents referred in the Report | Publication Date | Patent Family | Publication Date |
|---|---|---|---|
| JP 2018-17839 A | 01 Feb. 2018 | (Family: none) | |
| JP 2000-249966 A | 14 Sep. 2000 | (Family: none) | |
| JP 2012-163786 A | 30 Aug. 2012 | US 2012/0200788 A1 CN 102628974 A | |
| WO 2013/145550 A1 | 03 Oct. 2013 | US 2015/0008601 A1 CN 104246550 A KR 10-2014-0146584 A TW 201339665 A | |

Form PCT/ISA/210 (patent family annex) (January 2015)

38

**REFERENCES CITED IN THE DESCRIPTION**

**Patent documents cited in the description**

- JP H640271 A
- JP 5973109 B
- JP 2003315556 A
- JP 2004029824 A
- JP 2002090743 A